# EUROPEAN PATENT APPLICATION

(11) **EP 4 814 542 A1**
(43) Date of publication of application: **30.09.2026**
(21) Application number: 24893820.1
(22) Date of filing: 28.08.2024
(51) Int. Cl.: G01S 17/34, G01S 7/4912

(54) **OPTICAL MEASUREMENT DEVICE, OPTICAL MEASUREMENT METHOD, AND OPTICAL MEASUREMENT PROGRAM**

(30) Priority: 20.11.2023 JP 2023197018
(71) Applicant: National Institute of Advanced Industrial Science and Technology, Chiyoda-ku Tokyo 100-8921 (JP)
(72) Inventor: TSUCHIDA Hidemi, Tsukuba-shi Ibaraki 305-8560 (JP)
(74) Representative: Plasseraud IP
(86) International application number: PCT/JP2024/030586
(87) International publication number: WO 2025/109825

(57) **Abstract**

TECHNICAL FIELD

An optical measuring apparatus configured to use an optical splitter to split, into probe light and reference light, light outputted from a multi-frequency laser configured to generate a high-frequency subcarrier with frequency modulation and a low-frequency subcarrier with frequency modulation, the high-frequency subcarrier and the low-frequency subcarrier being symmetrically positioned with respect to a frequency of a carrier. The optical measuring apparatus includes an optical system configured to apply the probe light to an object and to output scattering light from the object as signal light, a beat signal generator configured to generate, from the reference light and signal light, a first complex beat signal derived from the high-frequency subcarrier and a second complex beat signal derived from the low-frequency subcarrier, and a calculation unit configured to calculate the velocity of the object using the average value of the sum of the frequency of the first complex beat signal and the frequency of the second complex beat signal.

## Description

### TECHNICAL FIELD

The present invention relates to an optical measuring apparatus, optical measuring method, and optical measuring program suitable as an environment recognition sensor or the like used in automobiles, autonomous robots, and the like.

### BACKGROUND ART

Light detection and ranging (LiDAR) has been developed as environment recognition sensors mounted on automobiles and autonomous robots or for purposes such as shape measurement in construction/civil engineering sites. Compared to time of flight (ToF) LiDAR, which is becoming increasingly practical, frequency modulated continuous wave (FMCW) LiDAR (hereinafter referred to as FMCW LiDAR) is able to perform high-sensitivity detection and to measure not only the distance to an object but also the relative velocity of the object using the Doppler shift. FMCW LiDAR in the millimeter wave range has been in practical use as car-mounted collision prevention sensors. If FMCW LiDAR can be used in the optical wave range, a significant improvement in spatial resolution and measurement accuracy can be expected.

One of challenges to FMCW LiDAR is to overcome the limit of the maximum measurement distance due to the coherence of laser light. FMCW LiDAR modulates the frequency of output laser light and generates a beat signal by mixing scattering light from an object with reference light as a reference for measurement to perform coherent detection. The output laser light varies due to frequency modulation, as well as frequency noise emitted by the laser light itself. For this reason, the beat signal contains both a component derived from the frequency modulation and a component caused by the frequency noise. As the distance to the object increases, the time by which the scattering light lags behind the reference light (the delay time) increases. Moreover, the component derived from the frequency noise becomes larger than the component derived from the frequency modulation, and the signal-to-noise ratio of the beat signal decreases. As a result, the accuracy of measurement of the distance to the object decreases.

To apply FMCW LiDAR to an environment recognition sensor for autonomous vehicles, the senor is required to detect an object 200 m or more away. The coherence length of output laser light is a measure serving as a guideline for the maximum measurement distance. The coherence length is defined as the distance where the value of the coherence function becomes 1/e. A factor that determines the coherence length is the frequency noise of the output laser light. As the noise increases, the coherence length decreases. The coherence length of a typical semiconductor laser for optical communication is 100 m or less. Since FMCW LiDAR makes light to be measured travel to and from an object, the maximum measurement distance is limited to 50 m or less.

For example, Patent Literature 1 discloses a technology that uses a signal representing the difference frequency (difference) between two complex beat signals generated by a multi-frequency laser (a difference frequency signal) in order to overcome the limit of the maximum measurement distance due to the coherence length of laser light when measuring the velocity of an object.

### Citation List

### Patent Literature

[Patent Literature 1] International Publication No. 2021/131315

### SUMMARY OF INVENTION

### Problems to be Solved by Invention

FMCW LiDAR calculates the relative velocity of an object from the magnitude of the Doppler shift. The magnitude of the Doppler shift is proportional to the relative velocity and the frequency of light. An optical measuring apparatus of Patent Literature 1 is configured to measure the velocity of an object using a difference frequency signal representing the difference in frequency between complex beat signals generated from two measurement light beams having different frequencies. The Doppler shifts proportional to the frequencies occur in the two measurement light beams used by the optical measuring apparatus. In the difference frequency signal, the Doppler shifts are subtracted from each other, and a frequency corresponding to the difference in the Doppler shift between the two measurement lights remains. For example, when the wavelength is 1550 nm (the frequency is 193.4 THz) and the difference in frequency between the two measurement light beams is 50 GHz, the magnitude of the Doppler shift becomes approximately 1/3870, resulting in a reduction in detection sensitivity. For this reason, it is difficult to improve the accuracy of measurement of the velocity of the object.

The present invention has been made to solve the above-mentioned problems, and an object thereof is to provide an optical measuring apparatus, optical measuring method, and optical measuring program that are able to measure the velocity of an object with high accuracy by overcoming the limit of the distance to the object due to the coherence length of laser light.

### Problem Solving Means

An optical measuring apparatus according to one aspect of the present invention includes a multi-frequency laser configured to generate a high-frequency subcarrier with frequency modulation and a low-frequency subcarrier with frequency modulation, the high-frequency subcarrier and the low-frequency subcarrier being symmetrically positioned with respect to a frequency of a carrier, an optical splitter configured to split light outputted from the multi-frequency laser into probe light and reference light, an optical system configured to apply the probe light to an object and to output scattering light from the object as signal light, a beat signal generator configured to receive the reference light and the signal light and to generate and output a first complex beat signal derived from the high-frequency subcarrier and including an in-phase component and a quadrature component and a second complex beat signal derived from the low-frequency subcarrier and including an in-phase component and a quadrature component, and a calculation unit configured to calculate velocity of the object using an average value of a sum frequency, the sum frequency being a sum of a frequency of the first complex beat signal and a frequency of the second complex beat signal.

An optical measuring method according to one aspect of the present invention includes a subcarrier generation step of simultaneously generating, by a multi-frequency laser, a high-frequency subcarrier with frequency modulation and a low-frequency subcarrier with frequency modulation, the high-frequency subcarrier and the low-frequency subcarrier being symmetrically positioned with respect to a frequency of a carrier, a light splitting step of splitting, by an optical splitter, light outputted from the multi-frequency laser into probe light and reference light, an application step of, by an optical system, applying the probe light to an object and outputting scattering light from the object as signal light, a complex beat signal generation step of, by a beat signal generator, receiving the reference light and the signal light and generating and outputting a first complex beat signal derived from the high-frequency subcarrier and including an in-phase component and a quadrature component and a second complex beat signal derived from the low-frequency subcarrier and including an in-phase component and a quadrature component, and a velocity calculation step of calculating, by a calculation unit, velocity of the object using an average value of a sum frequency, the sum frequency being a sum of a frequency of the first complex beat signal and a frequency of the second complex beat signal.

An optical measuring method according to one aspect of the present invention is an optical measuring method performed by a calculation unit configured to calculate velocity of an object on the basis of light outputted from a multi-frequency laser configured to generate a high-frequency subcarrier with frequency modulation and a low-frequency subcarrier with frequency modulation, the high-frequency subcarrier and the low-frequency subcarrier being symmetrically positioned with respect to a frequency of a carrier. The optical measuring method includes demodulating a first complex beat signal derived from the high-frequency subcarrier and including an in-phase component and a quadrature component and a second complex beat signal derived from the low-frequency subcarrier and including an in-phase component and a quadrature component to obtain a first frequency that is a frequency of the first complex beat signal and a second frequency that is a frequency of the second complex beat signal, respectively, summing up the first frequency and the second frequency to obtain a sum frequency, and calculating the velocity of the object using an average value of the sum frequency.

An optical measuring program according to one aspect of the present invention is an optical measuring program for causing a computer included in a calculation unit configured to calculate velocity of an object on the basis of light outputted from a multi-frequency laser configured to generate a high-frequency subcarrier with frequency modulation and a low-frequency subcarrier with frequency modulation, the high-frequency subcarrier and the low-frequency subcarrier being symmetrically positioned with respect to a frequency of a carrier, to function as velocity calculation means configured to demodulate a first complex beat signal derived from the high-frequency subcarrier and including an in-phase component and a quadrature component and a second complex beat signal derived from the low-frequency subcarrier and including an in-phase component and a quadrature component to obtain a first frequency that is a frequency of the first complex beat signal and a second frequency that is a frequency of the second complex beat signal, respectively, to sum up the first frequency and the second frequency to obtain a sum frequency, and to calculate the velocity of the object using an average value of the sum frequency.

### Advantageous Effects of Invention

The optical measuring apparatus, optical measuring method, and optical measuring program according to the present invention calculate the velocity of the object using the average value of the sum of the frequency of the first complex beat signal derived from the high-frequency subcarrier with frequency modulation and the frequency of the second complex beat signal derived from the low-frequency subcarrier with frequency modulation. Thus, the optical measuring apparatus and the like are able to remove the component derived from the frequency noise and thus to overcome the limit of the distance to the object due to the coherence length of laser light and to measure the velocity of the object with high accuracy.

### BRIEF DESCRIPTION OF DRAWINGS

FIG. 1 is a schematic diagram illustrating the basic configuration of an optical measuring apparatus according to an embodiment of the present invention.
FIG. 2 is a configuration diagram showing a specific example configuration of a multi-frequency laser in FIG. 1.
FIG. 3 is configuration diagram showing another specific example configuration of the multi-frequency laser in FIG. 1. FIGS. 4A and 4B are diagrams illustrating the spectrum of light outputted from the multi-frequency laser in FIG. 1, frequency-modulated subcarriers, and frequency noise superimposed on each subcarrier.
FIG. 5 is a configuration diagram showing a first example of a beat signal generator in FIG. 1.
FIG. 6 is a configuration diagram showing a specific example of one of quadrature detectors in FIG. 5.
FIG. 7 is a configuration diagram showing a specific example of the other quadrature detector in FIG. 5.
FIG. 8 is a configuration diagram showing a second example of the beat signal generator in FIG. 1.
FIG. 9 is a configuration diagram showing a specific example of one of phase diversity detectors in FIG. 8.
FIG. 10 is a configuration diagram showing a specific example of the other phase diversity detector in FIG. 8.
FIG. 11 is a diagram illustrating the Doppler shift experienced by a carrier and subcarriers when an object is moving relative to the optical measuring apparatus shown in FIG. 1.
FIG. 12 is a diagram illustrating a process in which a calculation unit in FIG. 1 calculates the velocity of the object and the distance to the object using a sum frequency and a difference frequency based on the frequencies of the two complex beat signals.
FIGS. 13A to 13D are diagrams showing the frequency modulation of reference light and signal light, the frequencies of beat signals, a sum frequency, and a difference frequency, derived from a high-frequency subcarrier and a low-frequency subcarrier.
FIG. 14 is a flowchart schematically illustrating the flow of operation in an optical measuring method according to an embodiment of the present invention.
FIGS. 15A and 15B are frequency-related two time waveform graphs associated with each other, in which FIG. 15A shows the time waveform of the frequency modulation ν_{M}(t) of the high-frequency subcarrier and FIG. 15B shows the time waveform of the frequency noise ν_{N}(t) of the multi-frequency laser.

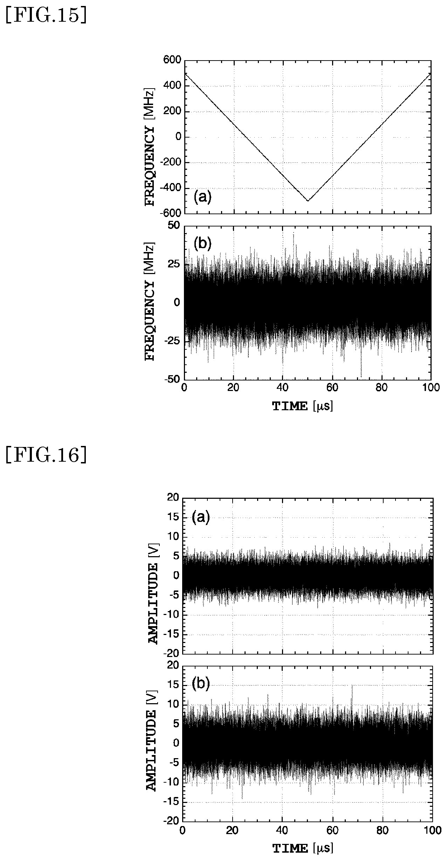

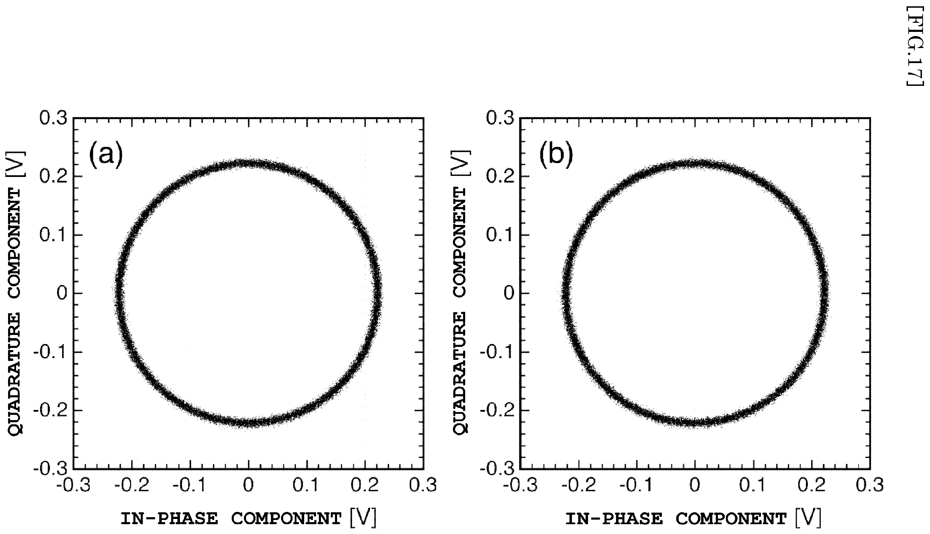

FIGS. 16A and 16B are amplitude-related two time waveform graphs associated with each other, in which FIG. 16A shows the time waveform of shot noise I⁺ₛₕₒₜ(t) appearing on the in-phase component of the high-frequency subcarrier and FIG. 16B shows the time waveform of photodetector noise I⁺_{PD}(t) appearing on the in-phase component of the high-frequency subcarrier. FIGS. 17A and 17B are diagrams showing complex beat signals of the two subcarriers on IQ planes (complex planes), in which FIG. 17 A corresponds to the high-frequency subcarrier and FIG. 17B corresponds to the low-frequency subcarrier.
FIGS. 18A to 18D are diagrams showing changes over time in multiple frequencies, in which FIG. 18A shows the time waveform of the frequency of the high-frequency subcarrier, FIG. 18B shows the time waveform of the frequency of the low-frequency subcarrier, FIG. 18C shows the time waveform of the difference frequency, and FIG. 18D shows the time waveform of the sum frequency.
FIG. 19 is a diagram showing the time waveform of the difference frequency when the power of the signal light is changed from 10 µW to 100 pW.
FIG. 20 is a diagram showing the time waveform of the sum frequency when the power of the signal light is changed from 10 µW to 100 pW.
FIG. 21 is a graph showing the relationship between the power of the signal light and the distance calculated from the difference frequency on a coordinate system having a horizontal axis representing the power of the signal light and a vertical axis representing the distance to the object.
FIG. 22 is a graph showing the velocity calculated from the sum frequency and the velocity calculated from the difference frequency on a coordinate system having a horizontal axis representing the power of the signal light and a vertical axis representing the velocity of the object.

### DESCRIPTION OF EMBODIMENTS

### Embodiment

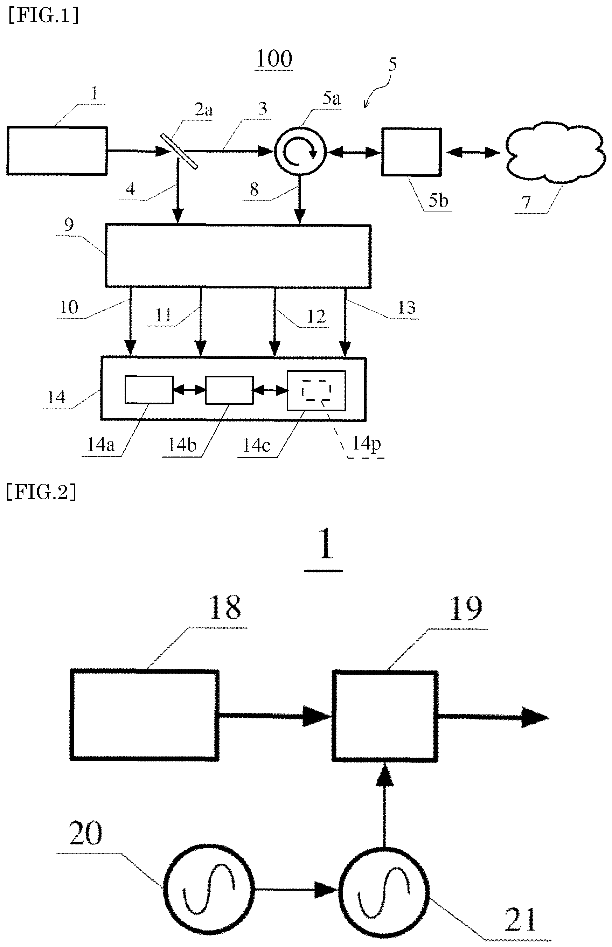

An optical measuring apparatus, optical measuring method, and optical measuring program according to an embodiment of the present invention will be described with reference to FIGS. 1 to 22. In the drawings, some of the reference signs may be omitted for purposes such as the avoidance of complexity of the drawings.

First, referring to FIG. 1, an example of the overall configuration of an optical measuring apparatus 100 will be described. The optical measuring apparatus 100 illustrated in FIG. 1 includes a multi-frequency laser 1, an optical splitter 2a, an optical system 5, a beat signal generator 9, and a calculation unit 14. The multi-frequency laser 1 simultaneously generates a high-frequency subcarrier 16 with frequency modulation and a low-frequency subcarrier 17 with frequency modulation that are symmetrically positioned with respect to the frequency of a carrier 15. The high-frequency subcarrier 16 is a subcarrier obtained by shifting the carrier 15 to the high-frequency side and modulating the frequency of the resulting carrier, and the low-frequency subcarrier 17 is a subcarrier obtained by shifting the carrier 15 to the low-frequency side and modulating the frequency of the resulting carrier.

The optical splitter 2a splits light outputted from the multi-frequency laser 1 into probe light 3 and reference light 4, outputs the probe light 3 to an optical circulator 5a, and outputs the reference light 4 to the beat signal generator 9.

The optical system 5 applies the probe light 3 outputted from the optical splitter 2a to an object 7 and outputs scattering light from the object 7 as signal light 8. The optical system 5 according to the present embodiment consists of the optical circulator 5a and a transmitting/receiving optical system 5b. The optical circulator 5a applies the probe light 3 outputted from the optical splitter 2a to the object 7 through the transmitting/receiving optical system 5b and outputs the scattering light from the object 7 to the beat signal generator 9 as the signal light 8.

The transmitting/receiving optical system 5b consists of a lens such as a collimator lens. The transmitting/receiving optical system 5b may be provided with a mechanism for spatially scanning the probe light 3, as necessary. This allows the transmitting/receiving optical system 5b to acquire a two-dimensional image of the distance to or velocity of the object 7. While FIG. 1 shows a case where the optical system 5 consists of the optical circulator 5a and the transmitting/receiving optical system 5b, this case is not limiting. For example, the optical system 5 may consist of the optical circulator 5a alone.

The beat signal generator 9 receives the reference light 4 and the signal light 8 and generates and outputs a first complex beat signal 31 derived from the high-frequency subcarrier 16 and including an in-phase component 10 and a quadrature component 11 and a second complex beat signal 32 derived from the low-frequency subcarrier 17 and including an in-phase component 12 and a quadrature component 13. The beat signal generator 9 according to the present embodiment is configured to generate the in-phase component 10 and quadrature component 11 of the first complex beat signal 31 and the in-phase component 12 and quadrature component 13 of the second complex beat signal 32 on the basis of the reference light 4 outputted from the optical splitter 2a and the signal light 8 outputted from the optical circulator 5a and to output them to the calculation unit 14.

The calculation unit 14 calculates a sum frequency that is the sum of the frequency of the first complex beat signal 31 and the frequency of the second complex beat signal 32 and calculates the velocity of the object 7 from the calculated sum frequency. The sum frequency is the sum of the frequency of the complex beat signal generated from the high-frequency subcarrier 16 and the frequency of the complex beat signal generated from the low-frequency subcarrier 17. Specifically, the calculation unit 14 demodulates the phases of the two complex beat signals (the first complex beat signal 31 and the second complex beat signal 32), then calculates the respective frequencies by differentiating the demodulated phases with respect to the time, and calculates the sum frequency from the calculated frequencies. The calculation unit 14 then calculates the velocity of the object 7 from the calculated sum frequency.

The calculation unit 14 may have a function of calculating a difference frequency that is the difference between the frequency of the first complex beat signal 31 and the frequency of the second complex beat signal 32 and calculating the distance to the object 7 from the calculated difference frequency. In this case, the calculation unit 14 demodulates the phases of the two complex beat signals, then calculates the respective frequencies by differentiating the demodulated phases with respect to the time, and calculates the difference frequency from the calculated frequencies.

More specifically, the calculation unit 14 includes a communication unit 14a, a calculation processing unit 14b, and a storage unit 14c. The communication unit 14a is an interface through which the calculation unit 14 communicates with external devices, such as the beat signal generator 9, by wire or wirelessly. The storage unit 14c is storing a program for operating the calculation processing unit 14b, such as an optical measuring program 14p, and other various types of information. The storage unit 14c includes RAM (random access memory), ROM (read-only memory), PROM (programmable ROM) such as flash memory, SSD (solid-state drive), or HDD (hard disk drive), and the like. The calculation processing unit 14b includes velocity calculation means for calculating the velocity of the object 7. The calculation processing unit 14b may also include distance calculation means for calculating the distance to the object 7. The calculation processing unit 14b consists of a CPU (central processing unit), GPU (graphics processing unit), or the like. The optical measuring program 14p implements various functions, such as the velocity calculation means, in collaboration with the calculation processing unit 14b.

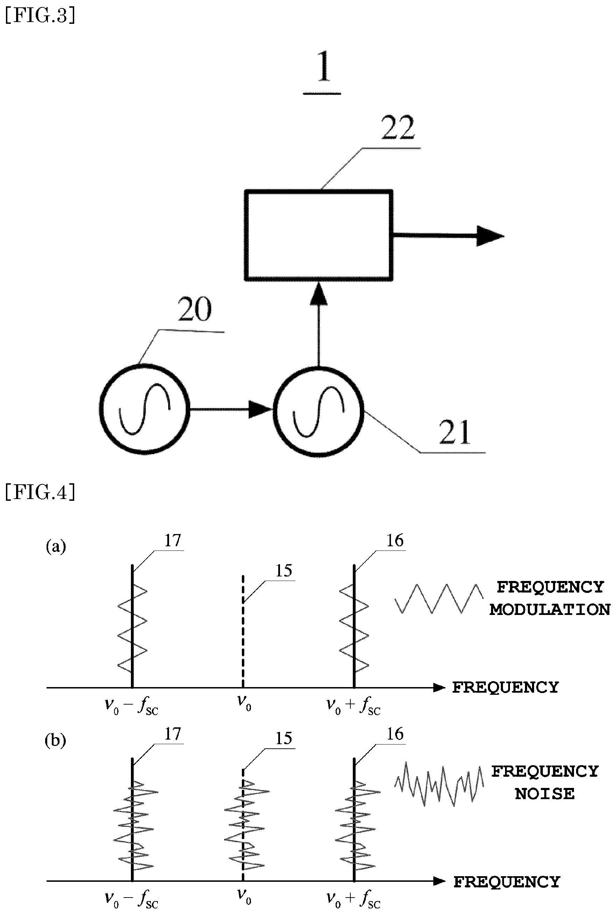

Next, referring to FIGS. 2 and 3, a specific example configuration of the multi-frequency laser 1 will be described. FIG. 2 shows a first specific example configuration of the multi-frequency laser 1. The multi-frequency laser 1 illustrated in FIG. 2 includes a single-frequency laser 18, an optical modulator 19, a modulation signal generator 20, and a subcarrier generation signal generator 21. The single-frequency laser 18 is a laser that outputs only light having a single frequency. The optical modulator 19 modulates light outputted from the single-frequency laser 18. The optical modulator 19 consists of an intensity modulator, a phase modulator, or the like and has a function of generating sidebands by modulation.

The subcarrier generation signal generator 21 drives the optical modulator 19 to generate two subcarriers in light outputted from the single-frequency laser 18. The subcarrier generation signal generator 21 has a function of modulating the frequency of light to be processed using a signal received from the outside. The subcarrier generation signal generator 21 according to the present embodiment generates two subcarriers having frequencies symmetrically positioned with respect to the frequency of the carrier 15 outputted from the single-frequency laser 18. Specifically, the subcarrier generation signal generator 21 generates the high-frequency subcarrier 16 having a center frequency of ν₀+f_{SC} and the low-frequency subcarrier 17 having a center frequency of ν₀-f_{SC}, where f_{SC} represents the center frequency of the subcarrier generation signal generator 21 set so as to match the characteristics of the beat signal generator 9 and ν₀ represents the center frequency of the carrier 15 included in the light outputted from the multi-frequency laser 1.

The modulation signal generator 20 is a signal source that applies frequency modulation to subcarriers. The modulation signal generator 20 according to the present embodiment is configured to apply frequency modulation to the two subcarriers generated by the subcarrier generation signal generator 21 such that the two subcarriers are in opposite phase. In other words, the multi-frequency laser 1 in FIG. 2 uses the modulation signal generator 20 and the subcarrier generation signal generator 21 to generate the high-frequency subcarrier 16 and low-frequency subcarrier 17 in the light to be outputted from the optical modulator 19.

FIG. 3 shows a second specific example configuration of the multi-frequency laser 1. The multi-frequency laser 1 illustrated in FIG. 3 includes a semiconductor laser 22, a modulation signal generator 20, and a subcarrier generation signal generator 21. The configuration of the modulation signal generator 20 and subcarrier generation signal generator 21 and processes performed thereby are the same as those in the first specific example. That is, the subcarrier generation signal generator 21 generates two subcarriers in the light to be outputted from the semiconductor laser 22. Specifically, the modulation signal generator 20 apply frequency modulation to the two subcarriers generated by the subcarrier generation signal generator 21 such that the two subcarriers are in opposite phase. In other words, the multi-frequency laser 1 in FIG. 3 uses the modulation signal generator 20 and subcarrier generation signal generator 21 to generate a high-frequency subcarrier 16 and a low-frequency subcarrier 17 in light to be outputted from the semiconductor laser 22.

The semiconductor laser 22 consists of, for example, a distributed feedback laser (DFB laser) or a modulator-integrated semiconductor laser (EML). An EML is a semiconductor laser having a modulator integrated therein. If the semiconductor laser 22 is a DFB laser, the subcarrier generation signal generator 21 outputs a generation signal for generating subcarriers to a current injected to the DFB laser to generate two subcarriers. If the semiconductor laser 22 is an EML, the subcarrier generation signal generator 21 outputs a generation signal to a modulator within the EML to generate two subcarriers.

The multi-frequency laser 1 modulates the carrier 15 to generate the high-frequency subcarrier 16 and low-frequency subcarrier 17, which are ±1st-order subcarriers. For this reason, the high-frequency subcarrier 16 and low-frequency subcarrier 17 include frequency noise in phase with the carrier 15. Moreover, in the multi-frequency laser 1, frequency modulation is applied to the high-frequency subcarrier 16 and low-frequency subcarrier 17, and the frequency noise of the subcarrier generation signal generator 21 is added thereto.

Next, referring to FIGS. 4A and 4B, an example configuration of the output light from the multi-frequency laser 1 will be described. FIG. 4A illustrates an example of the spectrum of the output light and the frequency-modulated two subcarriers. FIG. 4B illustrates an example of the spectrum of the output light and frequency noise superimposed on the carrier 15 and the two subcarriers. Specifically, the output light from the multi-frequency laser 1 consists of the carrier 15 having a center frequency of ν₀, the high-frequency subcarrier 16 having a center frequency of ν₀+f_{SC}, and the low-frequency subcarrier 17 having a center frequency of ν₀-f_{SC}. The high-frequency subcarrier 16 and low-frequency subcarrier 17 are frequency-modulated, and frequency noise is superimposed on each thereof.

As shown in FIG. 4A, the frequency modulations of the high-frequency subcarrier 16 and the low-frequency subcarrier 17 are in opposite phase. As shown in FIG. 4B, the high-frequency subcarrier 16 and the low-frequency subcarrier 17 are synchronized in phase with the carrier 15 and include the frequency noise in phase with that of the carrier 15. In the present embodiment, an example in which the ±1st-order two subcarriers (the high-frequency subcarrier 16 and low-frequency subcarrier 17) are used is shown. While only the ±1st order subcarriers are shown in FIGS. 4A and 4B for convenience's sake, the output light from the multi-frequency laser 1 may include higher order subcarriers.

Preferably, the frequency ν₀ of the carrier 15 and the frequencies ν₀±f_{SC} of the high-frequency subcarrier 16 and low-frequency subcarrier 17 are away from each other to the extent that these subcarriers can be optically separated. Preferably, the center frequency f_{SC} of the subcarrier generation signal generator 21 falls within the range of frequencies that the modulator can process or the range of frequencies that can respond in accordance with direct modulation of the laser. The center frequency f_{SC} and the frequency ν₀ can be set to any values and are not limited to particular values in principle. However, in practice, the set values of the center frequency f_{SC} and frequency ν₀ are limited by the specification of available components. The minimum value of the center frequency f_{SC} is, for example, the minimum value within a range where a level of frequency difference separable by an optical filter (approximately 5 GHz) is made between the minimum value and the frequency ν₀. The maximum value of the center frequency f_{SC} greatly depends on the modulation performance of the modulation signal generator 20 and is set to, for example, approximately 50 GHz. The frequency ν₀ of the carrier 15 can be set to all frequencies where a single-frequency laser exists. That is, the frequency ν₀ of the carrier 15 can be set in all ranges from the ultraviolet range, through the visible range, to the infrared range.

While the example in which the ±1st-order subcarriers having center frequencies of ν₀±f_{SC} generated from the carrier 15 having a center frequency of ν₀ are used is described below, the high-frequency subcarrier 16 and low-frequency subcarrier 17 are not limited to the ±1st-order subcarriers with respect to the carrier 15. In the optical measuring apparatus 100, the multi-frequency laser 1 may be configured to generate higher-order subcarriers, that is, ±2nd or higher order subcarriers as the high-frequency subcarrier 16 and low-frequency subcarrier 17 and to calculate the velocity or the like using those subcarriers.

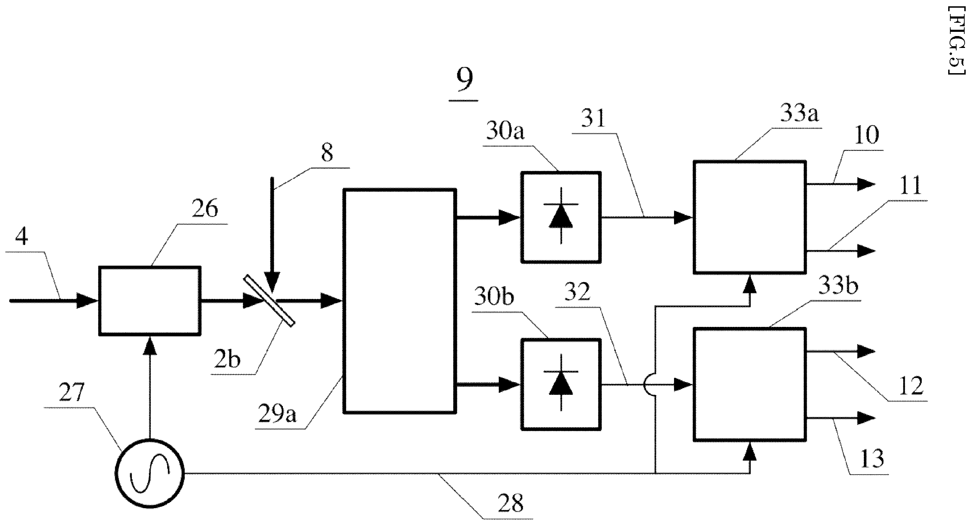

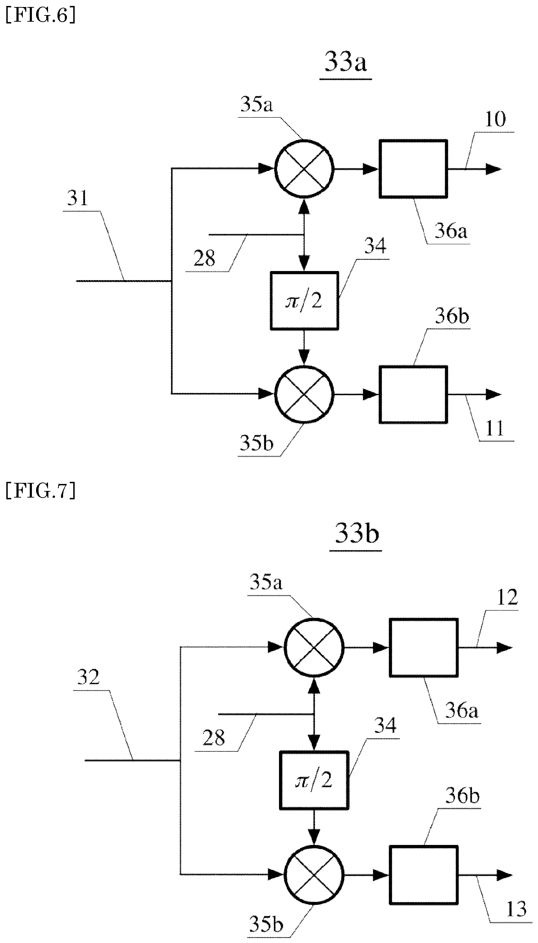

Next, referring to FIGS. 5 to 10, a specific example configuration of the beat signal generator 9 will be described. First, referring to FIGS. 5 to 7, a first example of the beat signal generator 9 will be described. FIG. 5 is a configuration diagram showing the first example of the beat signal generator 9. FIG. 6 is a configuration diagram showing a specific example of a quadrature detector 33a in FIG. 5. FIG. 7 is a configuration diagram showing a specific example of a quadrature detector 33b in FIG. 5.

The beat signal generator 9 illustrated in FIG. 5 has a configuration similar to that of a heterodyne interferometer including optical detectors and quadrature detectors. More specifically, the beat signal generator 9 includes an optical frequency shifter 26, an optical frequency shifter drive signal source 27, an optical coupler 2b, an optical splitter 29a, an optical detector 30a, an optical detector 30b, a quadrature detector 33a, and a quadrature detector 33b.

The optical frequency shifter 26 shifts the frequency of the reference light 4 and outputs the resulting light. The optical frequency shifter drive signal source 27 outputs a drive signal to the optical frequency shifter 26 to drive the optical frequency shifter 26. The optical frequency shifter drive signal source 27 also outputs a reference signal 28 for splitting a complex beat signal into an in-phase component and a quadrature component to each of the quadrature detector 33a and quadrature detector 33b.

The optical coupler 2b consists of, for example, a beam splitter. The optical coupler 2b combines light outputted from the optical frequency shifter 26 and the signal light 8 outputted from the optical circulator 5a and outputs the combined light to the optical splitter 29a. The optical splitter 29a splits the light outputted from optical coupler 2b into a component derived from high-frequency subcarrier 16 and a component derived from the low-frequency subcarrier 17 and outputs one of the split components to the optical detector 30a and the other to the optical detector 30b.

The optical detector 30a photoelectrically converts the component derived from the high-frequency subcarrier 16 outputted from the optical splitter 29a into a first complex beat signal 31 and outputs it to the quadrature detector 33a. The photodetector 30b photoelectrically converts the component derived from the low-frequency subcarrier 17 outputted from the optical splitter 29a into a second complex beat signal 32 and outputs it to the quadrature detector 33b. The quadrature detector 33a applies the reference signal 28 to the first complex beat signal 31 to generate the in-phase component 10 and the quadrature component 11 of the first complex beat signal 31, and outputs the generated in-phase component 10 and quadrature component 11 to the calculation unit 14. The quadrature detector 33b applies the reference signal 28 to the second complex beat signal 32 to generate the in-phase component 12 and the quadrature component 13 of the second complex beat signal 32, and outputs the generated in-phase component 12 and quadrature component 13 to the calculation unit 14.

In summary, the beat signal generator 9 shown in FIG. 5 shifts the frequency of the reference light 4 using the optical frequency shifter 26, then combines the resulting light with the signal light 8 using the optical coupler 2b, and inputs the combined light to the optical splitter 29a. The optical splitter 29a splits the received light into the component derived from the high-frequency subcarrier 16 and the component derived from the low-frequency subcarrier 17 and outputs the split components. The components split by the optical splitter 29a are received by the optical detectors 30a and 30b, respectively. The optical detector 30a outputs the first complex beat signal 31 to the quadrature detector 33a, and the optical detector 30b outputs the second complex beat signal 32 to the quadrature detector 33b. The quadrature detector 33a outputs the received in-phase component 10 and quadrature component 11 of the first complex beat signal 31 to the calculation unit 14. The quadrature detector 33b outputs the received in-phase component 12 and quadrature component 13 of the second complex beat signal 32 to the calculation unit 14.

As shown in FIGS. 6 and 7, the quadrature detector 33a and quadrature detector 33b each include a π/2 electrical phase shifter 34, a frequency mixer 35a, a frequency mixer 35b, a low-pass filter 36a, and a low-pass filter 36b. As shown in FIG. 6, the quadrature detector 33a is configured to split the first complex beat signal 31 into two signals and to input one of the split signals to the frequency mixer 35a and the other to the frequency mixer 35b. As shown in FIG. 7, the quadrature detector 33b is configured to split the second complex beat signal 32 into two signals and to input one of the split signals to the frequency mixer 35a and the other to the frequency mixer 35b.

The quadrature detector 33a and quadrature detector 33b each split the reference signal 28 outputted from the optical frequency shifter drive signal source 27 into two signals and output one of the split signals to the frequency mixer 35a and the other to the π/2 electrical phase shifter 34. The frequency mixer 35a receives one of the two signals obtained by splitting the reference signal 28, as a local oscillation signal. The frequency mixer 35a then changes the frequency of the first complex beat signal 31 or second complex beat signal 32 using the received local oscillation signal and outputs the resulting signal to the low-pass filter 36a. The frequency mixer 35a also multiplexes the received two signals and outputs the resulting sum frequency signal and difference frequency signal.

The π/2 electrical phase shifter 34 of each of the quadrature detector 33a and quadrature detector 33b shifts the phase of the other of the two signals obtained by splitting the reference signal 28, by π/2 and outputs the resulting signal to the frequency mixer 35b. The frequency mixer 35b receives the signal outputted from the π/2 electrical phase shifter 34 as a local oscillation signal. The frequency mixer 35b then changes the frequency of the first complex beat signal 31 or second complex beat signal 32 using the received local oscillation signal and outputs the resulting signal to the low-pass filter 36b. The frequency mixer 35b multiplexes the received two signals and outputs the resulting sum frequency signal and difference frequency signal.

In summary, the quadrature detector 33a and quadrature detector 33b each split the first complex beat signal 31 or the second complex beat signal 32 into two signals and inputs one of the split two signals into the frequency mixer 35a and the other into the frequency mixer 35b. The quadrature detector 33a and quadrature detector 33b also each input the reference signal 28 outputted from the optical frequency shifter drive signal source 27 to the frequency mixer 35a as a local oscillator signal. On the other hand, the quadrature detector 33a and quadrature detector 33b each shift the phase of the reference signal 28 outputted from the optical frequency shifter drive signal source 27 by π/2 using the π/2 electrical phase shifter 34 and input the resulting signal to the frequency mixer 35b as a local oscillation signal.

The quadrature detector 33a inputs the output of the frequency mixer 35a to the low-pass filter 36a and the output of the frequency mixer 35b to the low-pass filter 36b, removes the sum frequency signal using the low-pass filters (36a, 36b), and outputs the in-phase component 10 and the quadrature component 11 of the first complex beat signal 31. The quadrature detector 33b inputs the output of the frequency mixer 35a to the low-pass filter 36a and the output of the frequency mixer 35b to the low-pass filter 36b, removes the sum frequency signal using the low-pass filters (36a, 36b), and outputs the in-phase component 12 and quadrature component 13 of the second complex beat signal 32.

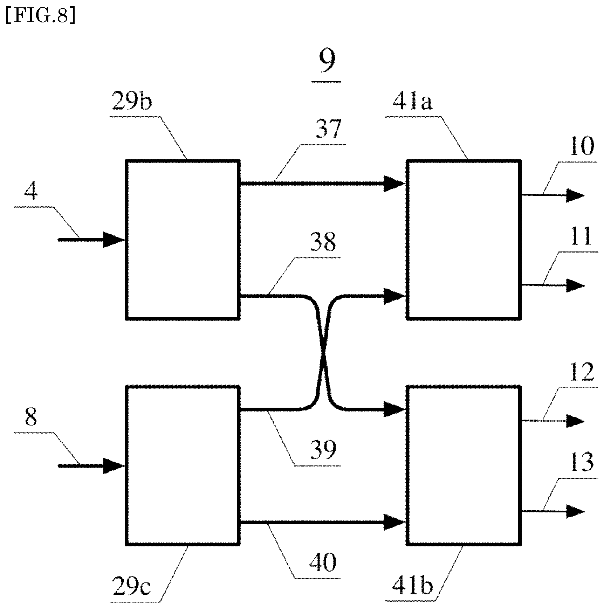

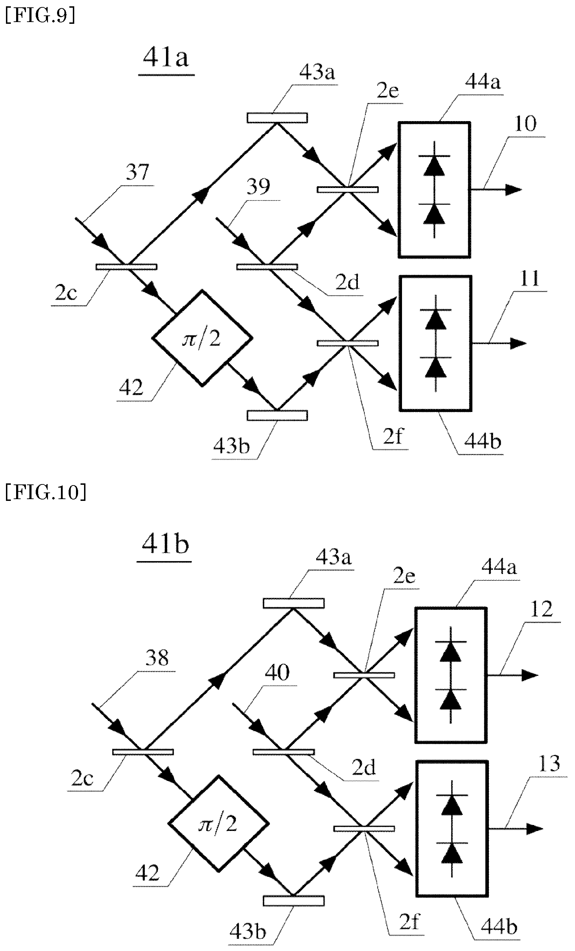

Next, referring to FIGS. 8 to 10, a second example of the beat signal generator 9 will be described. FIG. 8 is a configuration diagram showing the second example of the beat signal generator 9. FIG. 9 is a configuration diagram showing a specific example of a phase diversity detector 41a in FIG. 8. FIG. 10 is a configuration diagram showing a specific example of a phase diversity detector 41b in FIG. 8.

The beat signal generator 9 illustrated in FIG. 8 has a configuration similar to that of a homodyne interferometer including phase diversity detectors. More specifically, the beat signal generator 9 includes an optical splitter 29b, an optical splitter 29c, a phase diversity detector 41a, and a phase diversity detector 41b.

The optical splitter 29b receives the reference light 4 and generates reference light 37 derived from the high-frequency subcarrier 16 and reference light 38 derived from the low-frequency subcarrier 17 on the basis of the reference light 4. The optical splitter 29b outputs the reference light 37 to the phase diversity detector 41a and the reference light 38 to the phase diversity detector 41b.

The optical splitter 29c receives the signal light 8 and generates signal light 39 derived from the high-frequency subcarrier 16 and signal light 40 derived from the low-frequency subcarrier 17 on the basis of the signal light 8. The optical splitter 29c outputs the signal light 39 to the phase diversity detector 41a and the signal light 40 to the phase diversity detector 41b.

The phase diversity detector 41a generates and outputs the in-phase component 10 and quadrature component 11 of the first complex beat signal 31 on the basis of the reference light 37 and the signal light 39. The phase diversity detector 41b generates and outputs the in-phase component 12 and quadrature component 13 of the second complex beat signal 32 on the basis of the reference light 38 and signal light 40.

In summary, the beat signal generator 9 illustrated in FIG. 8 is configured to input the reference light 4 into the optical splitter 29b and the signal light 8 into the optical splitter 29c, to split each of these types of light into the component derived from the high-frequency subcarrier 16 and the component derived from the low-frequency subcarrier 17, and to output the split components. In other words, the beat signal generator 9 inputs the reference light 37 derived from the high-frequency subcarrier 16 outputted from the optical splitter 29b and the signal light 39 derived from the high-frequency subcarrier 16 outputted from the optical splitter 29c into the phase diversity detector 41a and outputs the in-phase component 10 and quadrature component 11 of the first complex beat signal 31 to the calculation unit 14. Similarly, the beat signal generator 9 inputs the reference light 38 derived from the low-frequency subcarrier 17 outputted from the optical splitter 29b and the signal light 40 derived from the low-frequency subcarrier 17 outputted from the optical splitter 29c into the phase diversity detector 41b and outputs the in-phase component 12 and quadrature component 13 of the second complex beat signal 32 to the calculation unit 14.

As shown in FIGS. 9 and 10, the phase diversity detector 41a and phase diversity detector 41b each include a beam splitter 2c, a beam splitter 2d, a beam splitter 2e, a beam splitter 2f, a π/2 optical phase shifter 42, a total reflection mirror 43a, a total reflection mirror 43b, a balanced photodetector 44a, and a balanced photodetector 44b. The π/2 optical phase shifter 42 changes (shifts) the phase of the received light by π/2 and outputs the resulting light.

The balanced photodetector 44a of the phase diversity detector 41a receives one of two pieces of light resulting from the split of the reference light 37 by the beam splitter 2c through the total reflection mirror 43a and beam splitter 2e, receives one of two pieces of light resulting from the split of the signal light 39 by the beam splitter 2d through the beam splitter 2e, and generates and outputs the in-phase component 10 of the first complex beat signal 31 on the basis of the received pieces of light. The balanced optical detector 44b of the phase diversity detector 41a receives the other of the two pieces of light resulting from the split of the reference light beam 37 by the beam splitter 2c through the π/2 optical phase shifter 42, total reflection mirror 43b, and beam splitter 2f, receives the other of the two pieces of light resulting from the split of the signal light 39 by the beam splitter 2d through the beam splitter 2f, and generates and outputs the quadrature component 11 of the first complex beat signal 31 on the basis of the received pieces of light.

The balanced photodetector 44a of the phase diversity detector 41b receives one of two pieces of light resulting from the split of the reference light 38 by the beam splitter 2c through the total reflection mirror 43a and the beam splitter 2e, receives one of two pieces of light resulting from the split of the signal light 40 by the beam splitter 2d through the beam splitter 2e, and generates and outputs the in-phase component 12 of the second complex beat signal 32 on the basis of the received pieces of light. The balanced photodetector 44b of the phase diversity detector 41a receives the other of the two pieces of light resulting from the split of the reference light 38 by the beam splitter 2c through the π/2 optical phase shifter 42, total reflection mirror 43b, and beam splitter 2f, receives the other of the two pieces of light resulting from the split of the reference light 38 by the beam splitter 2c through beam splitter 2f, and generates and outputs the quadrature component 13 of the second complex beat signal 32 on the basis of the received pieces of light.

In summary, the phase diversity detector 41a is configured such that the reference light 37 is split into two pieces of light by the beam splitter 2c, one of the two pieces of light is guided to the balanced photodetector 44a through the total reflection mirror 43a and the beam splitter 2e, and the other is guided to the balanced photodetector 44b through the π/2 optical phase shifter 42, the total reflection mirror 43b, and the beam splitter 2f. The phase diversity detector 41b is configured such that the reference light 38 is split into two pieces of light by the beam splitter 2c, one of the two pieces of light is guided to the balanced light detector 44a through the total reflection mirror 43a and beam splitter 2e, and the other is guided to the balanced photodetector 44b through the π/2 optical phase shifter 42, total reflection mirror 43b, and beam splitter 2f. The balanced light detector 44a of the phase diversity detector 41a outputs the in-phase component 10 of the first complex beat signal 31, and the balanced photodetector 44a of the phase diversity detector 41b outputs the in-phase component 12 of the second complex beat signal 32. The balanced photodetector 44b of the phase diversity detector 41a outputs the quadrature component 11 of the first complex beat signal 31, and the balanced photodetector 44b of the phase diversity detector 41b outputs the quadrature component 13 of the second complex beat signal 32.

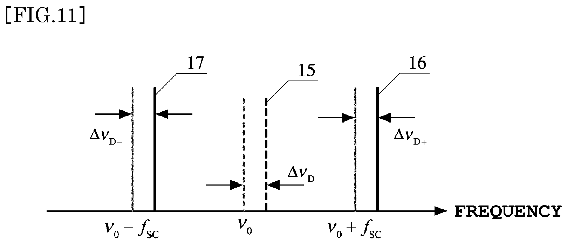

Next, referring to FIGS. 11 to 13, a calculation process or the like performed by the calculation unit 14 will be described specifically. The probe light 3 resulting from the split by the optical splitter 2a of the light outputted from the multi-frequency laser 1 includes the carrier and two subcarriers.

First, referring to FIG. 11, the Doppler shift experienced by the carrier and the two subcarriers will be described. FIG. 11 is a diagram showing the Doppler shift experienced by the probe light 3 when an object 7 is moving relative to the optical measuring apparatus 100. In other words, the Doppler shift in the following description refers to the Doppler shift caused by the relative motion of the object 7.

FIG. 11 illustrates the Doppler shift when the object 7 is relatively approaching the optical measuring apparatus 100. In this case, both the carrier 15 and the two subcarriers (16, 17) are shifted to the high-frequency side. By contrast, when the object 7 is relatively moving away from the optical measuring apparatus 100, both the carrier 15 and the two subcarriers (16, 17) are shifted to the low-frequency side (not shown).

The magnitude of the Doppler shift is proportional to the velocity of the object 7 relative to the optical measuring apparatus 100 and the frequency of light. Therefore, the Doppler shifts experienced by the carrier 15 and the two subcarriers (16, 17) differ in magnitude. For this reason, the Doppler shift of the carrier 15 is denoted as "Δν_{D}", the Doppler shift of the high-frequency subcarrier 16 as "Δν_{D+}", and the Doppler shift of the low-frequency subcarrier 17 as "Δν_{D-}".

As described above, the calculation unit 14 calculates the sum frequency and difference frequency on the basis of the frequency of the first complex beat signal 31 and the frequency of the second complex beat signal 32. The calculation unit 14 then calculates the velocity of the object 7 through a calculation process using the sum frequency based on the frequencies of the two complex beat signals. The calculation unit 14 also calculates the distance to the object 7 through a calculation process using the difference frequency based on the frequencies of the two complex beat signals.

In the calculation of the sum frequency by the calculation unit 14, the opposite-phase, frequency-modulated two subcarriers (16, 17) cancel each other out, and the frequency noise superimposed on the subcarrier 16 and the frequency noise superimposed on the subcarrier 17 that are in phase are summed up. On the other hand, in the calculation of the difference frequency by the calculation unit 14, the frequency noise superimposed on the subcarrier 16 and the frequency noise superimposed on the subcarrier 17 that are in phase cancel each other out, and the opposite-phase frequency-modulated two subcarriers are summed up. In the calculation of the difference frequency, the frequency noise of the multi-frequency laser 1 is completely removed, which allows the distance to be measured without being limited due to the coherence length.

The Doppler shifts of the high-frequency subcarrier 16 and the low-frequency subcarrier 17 are subtracted from the difference frequency and added to the sum frequency. For this reason, in the case of the difference frequency, the sensitivity to the Doppler shift is reduced. On the other hand, the Doppler shift appearing on the sum frequency is about twice as large as that before the addition, which allows the velocity to be measured with high sensitivity.

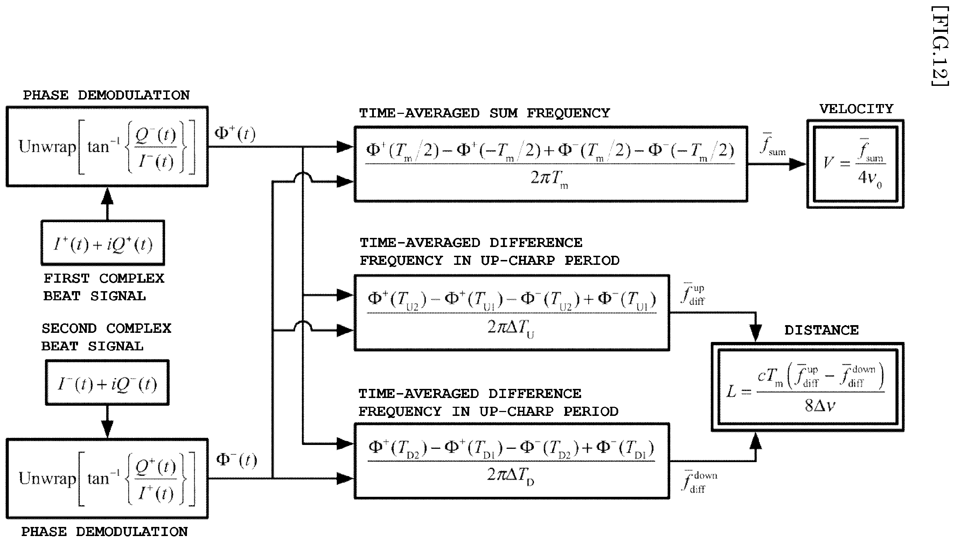

Referring to FIG. 12, a process of calculating the velocity of the object 7 and the distance to the object 7 from the first complex beat signal 31 and the second complex beat signal 32 will be described below. FIG. 12 is a diagram illustrating a process in which the calculation unit 14 calculates the velocity of the object 7 and the distance to the object 7 using the sum frequency and difference frequency based on the frequencies of the two complex beat signals. In the following description, physical quantities corresponding to the high-frequency subcarrier 16 are given a superscript symbol "+", and physical quantities corresponding to the low-frequency subcarrier 17 are given a superscript symbol "-". Hereafter, the optical measuring apparatus 100 including the beat signal generator 9 according to the first example in FIG. 5 will be mainly described.

The first complex beat signal 31 and the second complex beat signal 32 are represented by the following Formula (1). Formula (1) is a complex representation of the beat signals. In Formula (1), I^{±}(t) represents the in-phase components of the complex beat signals, and Q^{±}(t) represents the quadrature components of the complex beat signals. The same applies to the following Formulas.
[Formula 1] ${V}_{B}^{\pm } \left(t\right) = {I}^{\pm } \left(t\right) + {iQ}^{\pm } \left(t\right)$

The beat signal generator 9 according to first example shown in FIG. 5 outputs the complex beat signals represented by the following Formula (2). The beat signal generator 9 according to second example shown in FIG. 8 simultaneously outputs the in-phase components I^{±}(t), which is are real parts, and the quadrature components Q^{±}(t), which are imaginary parts.
[Formula 2] ${V}_{B}^{\pm } \left(t\right) = {I}^{\pm } \left(t\right) cos \left(2{πf}_{S}t\right) + {Q}^{\pm } \left(t\right) sin \left(2{πf}_{S}t\right)$

In Formula (2), f_{S} represents the amount of frequency shifted by the optical frequency shifter 26. When the quadrature detector 33a and quadrature detector 33b perform the above process on the complex beat signals represented by Formula (2), the complex beat signals are split into the in-phase components I^{±}(t) and quadrature components Q^{±}(t) and detected.

The in-phase components corresponding to the high-frequency subcarrier 16 and low-frequency subcarrier 17 can be represented by the following Formula (3), and the quadrature components corresponding to the high-frequency subcarrier 16 and low-frequency subcarrier 17 can be represented by the following Formula (4). In Formulas (3) and (4), A^{±} represents the net amplitudes, and Φ^{±}(t) represents the phases.
[Formula 3] ${I}^{\pm } \left(t\right) = {A}^{\pm } cos {Φ}^{\pm } \left(t\right)$
[Formula 4] ${Q}^{\pm } \left(t\right) = {A}^{\pm } sin {Φ}^{\pm } \left(t\right)$

The phases Φ^{±}(t) corresponding to the high-frequency subcarrier 16 and low-frequency subcarrier 17 can be calculated from the in-phase components represented by Formula (3) and the quadrature components represented by Formula (4) using the following Formula (5).
[Formula 5] ${Φ}^{\pm } \left(t\right) = Unwrap \left[{tan}^{- 1}\left\{\frac{{Q}^{\pm } \left(t\right)}{{I}^{\pm } \left(t\right)}\right\}\right]$

In Formula (5), Unwrap represents a phase unwrap process. Since an arctangent in Formula (5) calculates a value in the range of -π to +π, a phase exceeding ±π is subjected to subtraction by an integer multiple of ±2π and becomes a folded value. The phase unwrap process is a process of detecting a discontinuous, changed phase subjected to such subtraction and correcting it to obtain a true phase.

Next, the sum frequency and difference frequency will be described. The frequency f⁺(t) of the first complex beat signal 31 can be represented by the following Formula (6) as the time derivative of the phase Φ⁺(t).
[Formula 6] $\begin{matrix}{f}^{+} \left(t\right) = \frac{1}{2 π} \frac{{Φ}^{+} \left(t\right)}{dt} = \left\{{ν}_{N}\left(t\right)-{ν}_{N}\left(t-{τ}_{d}\right)\right\} + \frac{2 \left({ν}_{0}+{f}_{sc}\right) V}{c} \\ + \left\{{ν}_{M}\left(t\right)-{ν}_{M}\left(t-{τ}_{d}\right)\right\} + \left\{{ν}_{RF}\left(t\right)-{ν}_{RF}\left(t-{τ}_{d}\right)\right\}\end{matrix}$

In the rightmost side of Formula (6), the first term represents a component derived from the frequency noise of the multi-frequency laser 1, the second term represents a component derived from the Doppler shift, the third term represents a component derived from frequency modulation, and the fourth term represents a component derived from the frequency noise of the subcarrier generation signal generator 21. In Formula (6), ν_{N}(t) represents the frequency noise of the multi-frequency laser 1, τ_{d} represents the round-trip time of light to the object 7, ν₀ represents the frequency of the carrier, V represents the velocity of the object 7 relative to the optical measuring apparatus 100, ν_{M}(t) represents the frequency modulation of the subcarrier, and c represents the velocity of the light. Also, in Formula (6), f_{SC} represents the center frequency of the subcarrier generation signal generator 21, and ν_{RF}(t) represents the frequency noise of the subcarrier generation signal generator 21.

The magnitude of the Doppler shift is proportional to the frequency of the high-frequency subcarrier 16. If light having a wavelength of 1550 nm is used, the frequency of the high-frequency subcarrier 16 will be approximately 193.4 THz, resulting in an increase in the Doppler shift.

Similarly, the frequency f⁻(t) of the complex beat signal generated from the low-frequency subcarrier 17 can be represented by the following Formula (7).
[Formula 7] $\begin{matrix}{f}^{-} \left(t\right) = \frac{1}{2 π} \frac{{Φ}^{-} \left(t\right)}{dt} = \left\{{ν}_{N}\left(t\right)-{ν}_{N}\left(t-{τ}_{d}\right)\right\} + \frac{2 \left({ν}_{0}-{f}_{sc}\right) V}{c} \\ - \left\{{ν}_{M}\left(t\right)-{ν}_{M}\left(t-{τ}_{d}\right)\right\} - \left\{{ν}_{RF}\left(t\right)-{ν}_{RF}\left(t-{τ}_{d}\right)\right\}\end{matrix}$

The sum frequency fₛᵤₘ(t) can be calculated using the following Formula (8) based on Formulas (6) and (7).
[Formula 8] ${f}_{sum} \left(t\right) = {f}^{+} \left(t\right) + {f}^{-} \left(t\right) = 2 \left\{{ν}_{N}\left(t\right)-{ν}_{N}\left(t-{τ}_{d}\right)\right\} + \frac{4 {ν}_{0} V}{c}$

In the rightmost side of Formula (8) representing the sum frequency, the first term represents a component derived from the frequency noise of the multi-frequency laser 1, and the second term represents a component derived from the Doppler shift. More specifically, the component derived from the Doppler shift of the second term represents the sum of the Doppler shift of the high-frequency subcarrier 16 and the Doppler shift of the low-frequency subcarrier 17. Since the sum frequency is obtained by taking the sum of the frequency f⁺(t) and the frequency f⁻ (t), the component derived from the frequency modulation and the component derived from the frequency noise of the subcarrier generation signal generator 21 are completely removed. The component derived from the frequency noise of the first term on the rightmost side of Formula (8) can be removed through a time-averaging process due to the component being an AC signal. Thus, the Doppler shift can be calculated from the sum frequency. In other words, by calculating the average value of the sum frequency, the sum of the Doppler shift of the high-frequency subcarrier 16 and the Doppler shift of the low-frequency subcarrier 17 can be obtained. The magnitude of the Doppler shift is the sum of the Doppler shift of the high-frequency subcarrier 16 and the Doppler shift of the low-frequency subcarrier 17, and the sensitivity is approximately doubled.

The difference frequency f_{diff}(t) can be calculated using the following Formula (9) based on Formulas (6) and (7).
[Formula 9] ${f}_{diff} \left(t\right) = {f}^{+} \left(t\right) - {f}^{-} \left(t\right) = \frac{4 {f}_{sc} V}{c} + 2 \left\{{ν}_{M}\left(t\right)-{ν}_{M}\left(t-{τ}_{d}\right)\right\} + 2 \left\{{ν}_{RF}\left(t\right)-{ν}_{RF}\left(t-{τ}_{d}\right)\right\}$

In the rightmost side of Formula (9) representing the difference frequency, the first term represents the component derived from the Doppler shift, the second term represents the component derived from the frequency modulation, and the third term represents the component derived from the frequency noise of the subcarrier generation signal generator 21. The difference frequency is a frequency from which the components derived from the frequency noise of the multi-frequency laser 1 have been completely removed. The frequency noise is a factor that determines the coherence length, and the coherence length decreases as the noise increases. As reported in Patent Literature 1, the limit of the maximum measurement distance due to the coherence length is overcome by using the difference frequency from which the frequency noise has been removed.

However, Formula (9) representing the difference frequency shows that the magnitude of the Doppler shift is the difference between the Doppler shift corresponding to the high-frequency subcarrier 16 and the Doppler shift corresponding to the low-frequency subcarrier 17. If the frequency difference between the subcarriers is 50 GHz, the magnitude of the Doppler shift becomes approximately 1/3870 of the Doppler shifts of the high-frequency subcarrier 16 and low-frequency subcarrier 17 having frequencies of approximately 193.4 THz. For this reason, when the difference frequency is used, it is difficult to accurately calculate the velocity of the object 7.

Next, a process of calculating the velocity of the object 7 from the sum frequency fₛᵤₘ(t) represented by Formula (8) and a process of calculating the distance to the object 7 from the difference frequency f_{diff}(t) represented by Formula (9) will be described. In the following description, it is assumed that a triangular wave is used as the output of the modulation signal generator 20.

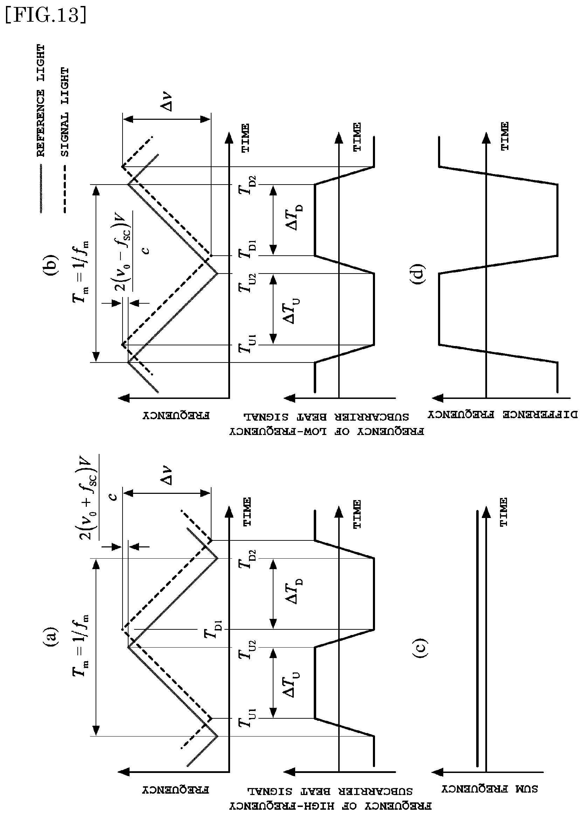

FIGS. 13A to 13D are diagrams showing the frequency modulation of the reference light and signal light, the beat signal frequency, the sum frequency, and the difference frequency, which are derived from the high-frequency subcarrier 16 and the low-frequency subcarrier 17. In FIGS. 13A to 13D, Tₘ represents the modulation period of the triangular wave, and Δν represents the chirp bandwidth. FIG. 13A corresponds to the high-frequency subcarrier 16, and FIG. 13B corresponds to the low-frequency subcarrier 17.

Due to frequency modulation using the triangular wave, the reference light and signal light alternately repeat up-chirp and down-chirp. Since the signal light lags behind the reference light, time domains where the frequency of the beat signal is a constant value and time domains where it changes from positive to negative values or from negative to positive values alternately appear in graphs in FIGS. 13A and 13B.

The component derived from the frequency noise of the multi-frequency laser 1 and the component derived from the Doppler shift appear on the sum frequency. The component derived from the frequency noise of the multi-frequency laser 1 is noise having an average value of 0 and can be removed through a time-averaging process represented by the following Formula (10). That is, the average value of the sum frequency corresponds to the Doppler shift caused by the relative movement of the object 7, namely, the sum of the Doppler shift of the high-frequency subcarrier 16 and the Doppler shift of the low-frequency subcarrier 17.
[Formula 10] ${\overline{f}}_{sum} = \frac{1}{{T}_{m}} {\int }_{- {T}_{m} / 2}^{{T}_{m} / 2} {f}_{sum} \left(t\right) dt = \frac{4 {ν}_{0} V}{c}$

The period in which the time-averaging process is performed can be set arbitrarily. Here, the period is set to one modulation period corresponding to one-time measurement of the distance or velocity. FIG. 13C shows the time-averaged sum frequency. The velocity of the object 7 can be calculated on the basis of the following Formula (11) using the time-averaged value of the sum frequency.
[Formula 11] $V = \frac{c {\overline{f}}_{sum}}{4 {ν}_{0}}$

In Formula (11), ν₀ is the frequency of the carrier 15. When the carrier 15 having a frequency of 193.4 THz is used, the sensitivity of the sum frequency to the velocity is 9.29 [MHz/km/h] .

By using the relationship between Formulas (6), (7), and (8) in Formula (10), the time average of the sum frequency can be represented by the following Formula (12).
[Formula 12] $\begin{matrix}{\overline{f}}_{sum} = \frac{1}{{T}_{m}} {\int }_{- {T}_{m} / 2}^{{T}_{m} / 2} \left\{{f}^{+}\left(t\right)+{f}^{-}\left(t\right)\right\} dt = \frac{1}{2 {πT}_{m}} {\int }_{- {T}_{m} / 2}^{{T}_{m} / 2} \left\{\frac{{Φ}^{+} \left(t\right)}{dt}+\frac{{Φ}^{-} \left(t\right)}{dt}\right\} dt \\ = \frac{1}{2 {πT}_{m}} \left\{{Φ}^{+}\left({T}_{m}/2\right)-{Φ}^{+}\left(-{T}_{m}/2\right)+{Φ}^{-}\left({T}_{m}/2\right)-{Φ}^{-}\left(-{T}_{m}/2\right)\right\}\end{matrix}$

Formula (12) shows that the time average of the sum frequency can be calculated from the phases of the high-frequency subcarrier 16 and low-frequency subcarrier 17. That is, by calculating the time average of the sum frequency using Formula (12), the time differentiation of Formulas (6) and (7) and the averaging process of Formula (10) become unnecessary. In other words, the beat signal generator 9 according to the first example shown in FIG. 5 obtains the time average of the sum frequency by demodulating the phases of the complex beat signals. Thus, the velocity is calculated by simply calculating the phases without converting the demodulated phases to frequencies.

FIG. 13D shows the difference frequency, in which the component derived from the frequency modulation and the component derived from the Doppler shift remain. The distance to the object 7 is calculated using a period ΔT_{U} corresponding to up-chirp from time T_{U1} to time T_{U2} and a period ΔT_{D} corresponding to down-chirp from time T_{D1} to time T_{D2}, which are periods when the difference frequency is a constant value in FIG. 13D. To calculate the distance to the object 7, it is desirable to avoid the time domains when the beat signal frequency changes from positive to negative values or from negative to positive values and to make the periods ΔT_{U} and ΔT_{D} equal in length and as long as possible.

The difference frequency in the period ΔT_{U}, which is a time domain corresponding to the up-chirp, can be represented by the following Formula (13).
[Formula 13] ${f}_{diff}^{up} \left(t\right) = \frac{4 {f}_{sc} V}{c} + \frac{2 Δ ν}{{T}_{m} / 2} {τ}_{d} + 2 \left\{{ν}_{RF}\left(t\right)-{ν}_{RF}\left(t-{τ}_{d}\right)\right\}$

In the right side of Formula (13), the first term represents the Doppler shift, the second term represents the component derived from the frequency modulation of the subcarrier, and the third term represents the component derived from the frequency noise of the subcarrier generation signal generator 21. The component derived from the frequency noise of the subcarrier generation signal generator 21 is noise having an average value of 0 and can be removed through a time-averaging process represented by the following Formula (14).
[Formula 14] ${\overline{f}}_{diff}^{up} = \frac{1}{Δ {T}_{U}} {\int }_{{T}_{U 1}}^{{T}_{U 2}} {f}_{diff}^{up} \left(t\right) dt = \frac{4 {f}_{sc} V}{c} + \frac{2 Δ ν}{{T}_{m} / 2} {τ}_{d}$

The difference frequency in the period ΔT_{U}, which is a time domain corresponding to the down-chirp, can be represented by the following Formula (15).
[Formula 15] ${f}_{diff}^{down} \left(t\right) = \frac{4 {f}_{sc} V}{c} - \frac{2 Δ ν}{{T}_{m} / 2} {τ}_{d} - 2 \left\{{ν}_{RF}\left(t\right)-{ν}_{RF}\left(t-{τ}_{d}\right)\right\}$

By removing the component derived from the frequency noise of the subcarrier generation signal generator 21 through a time-averaging process similar to that for the up-chirp, the following Formula (16) is obtained.
[Formula 16] ${\overline{f}}_{diff}^{down} = \frac{1}{Δ {T}_{D}} {\int }_{{T}_{D 1}}^{{T}_{D 2}} {f}_{diff}^{down} \left(t\right) dt = \frac{4 {f}_{sc} V}{c} - \frac{2 Δ ν}{{T}_{m} / 2} {τ}_{d}$

The distance to the object 7 can be calculated from the obtained difference frequencies in the period ΔT_{U} and the period ΔT_{D} using the following Formula (17).
[Formula 17] $L = \frac{{cτ}_{d}}{2} = \frac{{cT}_{m} \left({\overline{f}}_{diff}^{up}+{\overline{f}}_{diff}^{down}\right)}{8 Δ ν}$

The relative velocity of the object 7 can be calculated from the obtained difference frequencies in the period ΔT_{U} and the period ΔT_{D} using the following Formula (18).
[Formula 18] $V = \frac{c \left({\overline{f}}_{diff}^{up}-{\overline{f}}_{diff}^{down}\right)}{8 {f}_{SC}}$

In Formula (18), f_{SC} represents the center frequency of the subcarrier generation signal generator 21. When f_{SC} is 25 GHz, the sensitivity of the difference frequency to the velocity is 2.40 [kHz/km/h]. This sensitivity value is approximately 1/3870 of that obtained from the sum frequency.

As with the sum frequency, the time average of the difference frequency can be replaced with the phases of the high-frequency subcarrier 16 and low-frequency subcarrier 17. That is, the beat signal generator 9 according to the first example shown in FIG. 5 obtains the time average of the difference frequency by demodulating the phases of the complex beat signals. Thus, the distance to the object 7 can be calculated by simply calculating the phases without converting the demodulated phases to frequencies.

The following Formula (19) is a calculation formula for calculating the average value of the difference frequency in the up-chirp range by simply calculating the phases. The following Formula (20) is a calculation formula for calculating the average value of the difference frequency in the down-chirp range by simply calculating the phases.
[Formula 19] $\begin{matrix}{\overline{f}}_{diff}^{up} = \frac{1}{Δ {T}_{U}} {\int }_{{T}_{U 1}}^{{T}_{U 2}} {f}_{diff}^{up} \left(t\right) dt = \frac{1}{2 π Δ {T}_{U}} {\int }_{{T}_{U 1}}^{{T}_{U 2}} \left\{\frac{{Φ}^{+} \left(t\right)}{dt}-\frac{{Φ}^{-} \left(t\right)}{dt}\right\} dt \\ = \frac{1}{2 π Δ {T}_{U}} \left\{{Φ}^{+}\left({T}_{U 2}\right)-{Φ}^{+}\left({T}_{U 1}\right)-{Φ}^{-}\left({T}_{U 2}\right)+{Φ}^{-}\left({T}_{U 1}\right)\right\}\end{matrix}$
[Formula 20] $\begin{matrix}{\overline{f}}_{diff}^{down} = \frac{1}{Δ {T}_{D}} {\int }_{{T}_{D 1}}^{{T}_{D 2}} {f}_{diff}^{down} \left(t\right) dt = \frac{1}{2 π Δ {T}_{D}} {\int }_{{T}_{D 1}}^{{T}_{D 2}} \left\{\frac{{Φ}^{+} \left(t\right)}{dt}-\frac{{Φ}^{-} \left(t\right)}{dt}\right\} dt \\ = \frac{1}{2 π Δ {T}_{D}} \left\{{Φ}^{+}\left({T}_{D 2}\right)-{Φ}^{+}\left({T}_{D 1}\right)-{Φ}^{-}\left({T}_{D 2}\right)+{Φ}^{-}\left({T}_{D 1}\right)\right\}\end{matrix}$

The process in which the calculation unit 14 calculates the velocity of the object 7 is summarized as follows. That is, the calculation unit 14 demodulates the first complex beat signal 31 to obtain a first frequency that is the frequency of the first complex beat signal 31, and demodulates the second complex beat signal 32 to obtain a second frequency that is the frequency of the second complex beat signal 32. The demodulation applied to the two complex beat signals by the calculation unit 14 corresponds to the process of the above Formula (5). Specifically, the calculation unit 14 calculates the arctangent of the value obtained by dividing the quadrature component corresponding to the high-frequency subcarrier 16 by the in-phase component corresponding to the high-frequency subcarrier 16 and subjects the calculated value to a phase unwrapping process to obtain the first frequency. The calculation unit 14 also calculates the arctangent of the value obtained by dividing the quadrature component corresponding to the low-frequency subcarrier 17 by the in-phase component corresponding to the low-frequency subcarrier 17 and subjects the calculated value to a phase unwrapping process to obtain the second frequency. The calculation unit 14 then performs the processes based on the above Formulas (8), (11), and (12), that is, calculates the velocity of the object 7 using the average value of the sum frequency, which is the sum of the first frequency and the second frequency.

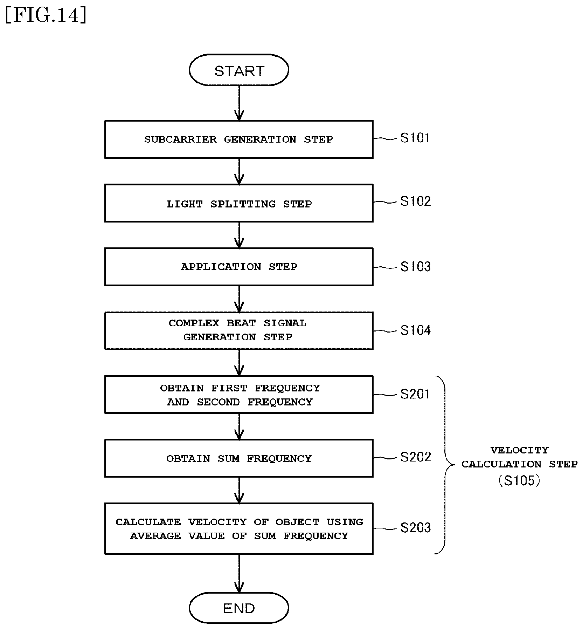

Next, referring to the flowchart of FIG. 14, an optical measuring method according to the present embodiment will be described. A process related to the calculation of the velocity using the sum frequency in the optical measuring method according to the present embodiment will be outlined below.

First, the optical measuring apparatus 100 uses the multi-frequency laser 1 to simultaneously generate the high-frequency subcarrier 16 with frequency modulation and the low-frequency subcarrier 17 with frequency modulation symmetrically positioned with respect to the frequency of the carrier 15 and to output light including the two subcarriers (16, 17) to the optical splitter 2a (step S101: a subcarrier generation step). Next, the optical measuring apparatus 100 uses the optical splitter 2a to split the light outputted from the multi-frequency laser 1 into the probe light 3 and reference light 4. The optical splitter 2a outputs the probe light 3 to the optical system 5 and the reference light 4 to the beat signal generator 9 (step S102: a light splitting step).

The optical measuring apparatus 100 then uses the optical system 5 to apply the probe light 3 to the object 7 and to output the scattering light from the object 7 as the signal light 8 to the beat signal generator 9 (step S103: an application step). The optical measuring apparatus 100 then uses the beat signal generator 9, which has received the reference light 4 and the signal light 8, to generate the first complex beat signal 31 derived from the high-frequency subcarrier 16 and including the in-phase component 10 and quadrature component 11 and the second complex beat signal 32 derived from the low-frequency subcarrier 17 and including the in-phase component 12 and quadrature component 13. The beat signal generator 9 outputs the in-phase component 10 and quadrature component 11 of the first complex beat signal 31 and the in-phase component 12 and quadrature component 13 of the second complex beat signal 32 to the calculation unit 14 (step S104: a complex beat signal generation process).

The optical measuring apparatus 100 then uses the calculation unit 14 to calculate the sum frequency, which is the sum of the frequency of the first complex beat signal 31 and the frequency of the second complex beat signal 32, and to calculate the velocity of the object 7 from the calculated sum frequency (step S105: a velocity calculation process). More specifically, the calculation unit 14 demodulates the first complex beat signal 31 to obtain the first frequency and demodulates the second complex beat signal 32 to obtain the second frequency (step S201), sums up the first frequency and the second frequency to obtain the sum frequency (step S202), and calculates the velocity of the object 7 using the average value of the sum frequency (step S203).

The above-mentioned optical measuring program 14p causes a computer included in the calculation unit 14 configured to calculate the velocity of the object 7 on the basis of output light from the multi-frequency laser 1 configured to generate the high-frequency subcarrier 16 with frequency modulation and the low-frequency subcarrier 17 with frequency modulation symmetrically positioned with respect to the frequency of the carrier 15 to function as means configured to demodulate the first complex beat signal 31 derived from the high-frequency subcarrier 16 and including the in-phase component 10 and quadrature component 11 to obtain the first frequency, to demodulate the second complex beat signal 32 derived from the low-frequency subcarrier 17 and including the in-phase component 12 and quadrature component 13 to obtain the second frequency, to sum up the first frequency and the second frequency to obtain the sum frequency, and to calculate the velocity of the object 7 using the average value of the sum frequency.

[Evaluation of Measurement Accuracy] A simulation was performed to evaluate the accuracy of the velocity of the object 7 measured by the optical measuring apparatus 100 according to the present embodiment. In this simulation, two complex beat signals including noise were generated using the beat signal generator 9 according to the second example shown in FIG. 8, the distance and velocity were calculated in accordance with the process of FIG. 12, and then the accuracy was evaluated. The frequency noise of the multi-frequency laser 1 and shot noise and photodetector noise generated in the balanced photodetectors 44a and 44b were considered as noise. The shot noise is noise included in laser light incident on the balanced photodetectors. The photodetector noise is noise that occurs even when no incident light is present and includes the dark current noise of the balanced photodetectors and the thermal noise of an amplifier disposed in the rear stage. The frequency noise of the subcarrier generation signal generator 21 is small compared to the frequency noise of the multi-frequency laser 1 and therefore is ignored.

The flow of the simulation will be described below. First, the frequencies f^{±}(t) of the complex beat signals generated from the high-frequency subcarrier 16 and the low-frequency subcarrier 17 are calculated using the following Formula (21).
[Formula 21] ${f}^{\pm } \left(t\right) = \left\{{ν}_{N}\left(t\right)-{ν}_{N}\left(t-{τ}_{d}\right)\right\} + \frac{2 \left({ν}_{0}\pm {f}_{sc}\right) V}{c} \pm \left\{{ν}_{M}\left(t\right)-{ν}_{M}\left(t-{τ}_{d}\right)\right\}$

In the right side of Formula (21), the first term represents the frequency noise of the multi-frequency laser 1, the second term represents the Doppler shift caused by the relative movement of the object 7, and the third term represents the components derived from the frequency modulation of the subcarriers. The round-trip time τ_{d} of light to the object 7 was set to 335 ns corresponding to a distance of 100.43 m, and the movement velocity of the object 7 was set to V=50.0 [km/h].

FIG. 15A is a diagram showing the time waveform of the frequency modulation ν_{M}(t) of the high-frequency subcarrier 16. In the frequency modulation ν_{M}(t) of FIG. 15A, the modulation waveform is a triangular wave, the modulation frequency is 10 kHz, and the chirp bandwidth is 1 GHz. The frequency modulation of the low-frequency subcarrier 17 is - ν_{M}(t) that is out of phase. FIG. 15B is a diagram showing the time waveform of the frequency noise ν_{N}(t) of the multi-frequency laser 1. FIG. 15B shows, as the frequency noise of the single-frequency laser 18 or semiconductor laser 22, a time waveform generated by numerical calculation when white noise corresponding to a spectral line width of 3 MHz is set. In-phase frequency noise ν_{N}(t) appears on the frequencies of the high-frequency subcarrier 16 and low-frequency subcarrier 17 outputted from the optical modulator 19.

Next, by substituting the frequencies f^{±}(t) of the complex beat signals represented by Formula (21) into the following Formulas (22) and (23), the in-phase components and quadrature components of the two complex beat signals are calculated.
[Formula 22] ${I}^{\pm } \left(t\right) = {A}^{\pm } cos \left\{2π{\int }_{0}^{t} {f}^{\pm } \left(t′\right) dt ′\right\} + {I}_{shot}^{\pm } \left(t\right) + {I}_{PD}^{\pm } \left(t\right)$
[Formula 23] ${Q}^{\pm } \left(t\right) = {A}^{\pm } sin \left\{2π{\int }_{0}^{t} {f}^{\pm } \left(t′\right) dt ′\right\} + {Q}_{shot}^{\pm } \left(t\right) + {Q}_{PD}^{\pm } \left(t\right)$

In Formula (22), I^{±}ₛₕₒₜ(t) and I^{±}_{PD}(t) represent shot noise and photodetector noise, respectively, that appear on the in-phase components of the complex beat signals. In Formula (23), Q^{±}ₛₕₒₜ(t) and Q^{±}_{PD}(t) represent shot noise and photodetector noise, respectively, that appear on the quadrature components of the complex beat signals. These types of noise are all mutually uncorrelated white noise. A± are amplitudes determined by the power of the reference light and signal light incident on the balanced photodetectors and can be represented by the following Formula (24).
[Formula 24] ${A}^{\pm } = ηG \sqrt{{P}_{ref} {P}_{sig}}$

In Formula (24), η represents the quantum efficiency of the balanced photodetectors, G represents the gain of the amplifier disposed in the rear stage of the balanced photodetectors, P_{ref} represents the power of the reference light, and P_{sig} represents the power of the signal light.

FIG. 16A is a diagram showing the time waveform of shot noise I⁺ₛₕₒₜ(t) appearing on the in-phase component of the high-frequency subcarrier 16. The standard deviation σₛₕₒₜ of the shot noise can be represented by the following Formula (25) .
[Formula 25] ${σ}_{shot} = 2 {eηGP}_{ref} \sqrt{{f}_{PD}}$

In Formula (25), e represents the charge of electrons, and f_{PD} represents the bandwidth of the balanced photodetectors. The time waveform in FIG. 16A shows white noise obtained by numerical calculation using values G=39 [kV/A], η=0.9 [A/W], P_{ref}=100 [µW], and f_{PD}=100 [MHz]. By using the same values for the other components of Formula (21), white noise uncorrelated with the time waveform in FIG. 16A was calculated.

FIG. 16B is a diagram showing the time waveform of photodetector noise I_{+PD}(t) appearing on the in-phase component of the high-frequency subcarrier 16. The standard deviation σ_{PD} of the photodetector noise can be represented by the following Formula (26).
[Formula 26] ${σ}_{PD} = {GN}_{PD} \sqrt{{f}_{PD}}$

In Formula (26), N_{PD} represents the noise equivalent power of the balanced photodetectors. The time waveform in FIG. 16B shows white noise obtained by numerical calculation using values G=39[kV/A], N_{PD}=8[pA/Hz¹/²], and f_{PD}=100[MHz]. By using the same values for the other components of Formulas (22) and (23), white noise uncorrelated with the time waveform in FIG. 16B was generated.

FIG. 17A is a diagram showing the complex beat signal corresponding to the high-frequency subcarrier 16 on an IQ plane. FIG. 17B is a diagram showing the complex beat signal corresponding to the low-frequency subcarrier 17 on an IQ plane. These complex beat signals are results obtained by performing calculation on the basis of Formulas (22) and (23) when the reference light has a power value of 100 µW and the signal light has a power value of 100 nW. The in-phase component and quadrature component of each complex beat signal are shifted in phase by 90°. For this reason, points are placed on the outline of a circle in each IQ plane. The thickness of the outline of the circle corresponds to the shot noise and photodetector noise.

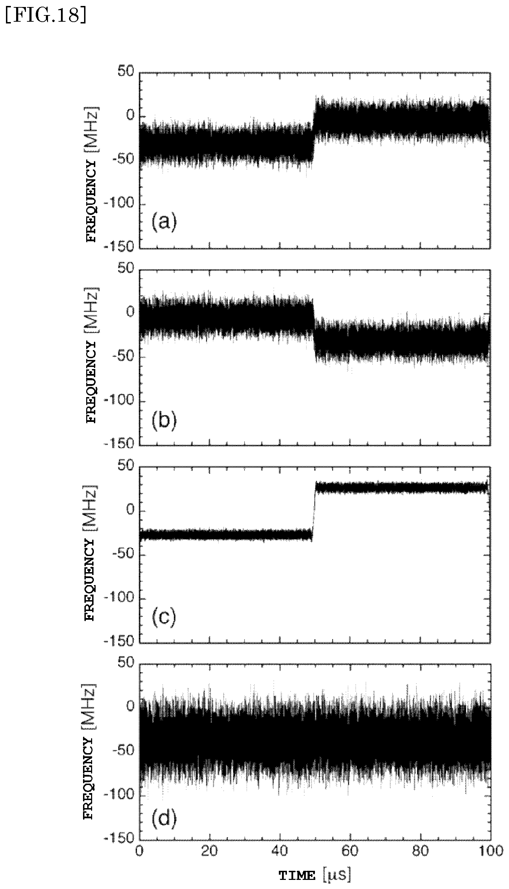

The phase Φ^{±}(t) were obtained with respect to the complex beat signals of Formula (21) using Formula (5), and then the frequencies were calculated in accordance with Formulas (6), (7), (8), and (9). FIG. 18A is a diagram showing the frequency of the complex beat signal of the high-frequency subcarrier 16. FIG. 18B is a diagram showing the time waveform of the frequency of the complex beat signal of the low-frequency subcarrier 17. The power of the reference light is 100 µW, and the power of the signal light is 100 nW.

In FIGS. 18A to 18D, the first half of the time waveform corresponds to down-chirp, and the second half corresponds to up-chirp. Since the frequency modulations of the high-frequency subcarrier 16 and the low-frequency subcarrier 17 are in opposite phase, the complex beat signals are also in opposite phase. While noise appearing on the time waveforms of FIGS. 18A and 18B is primarily derived from the frequency noise of the multi-frequency laser 1, it is also derived from the shot noise and photodetector noise. Due to the Doppler shift, the frequencies of the waveforms as a whole are shifted to the lower frequency side.

FIG. 18C is a diagram showing the time waveform of the difference frequency. In the difference frequency, the frequency noise of the multi-frequency laser 1 is canceled, and the difference between the frequencies corresponding to the down-chirp and up-chirp is seen more clearly. Noise remaining in the difference frequency is derived from the shot noise and photodetector noise. The frequency shifted due to the Doppler shift is "-9.27 kHz" and cannot be recognized on the time waveform.

FIG. 18D is a diagram showing the time waveform of the sum frequency. In the sum frequency, the frequency modulation is canceled, and the frequency noise of the multi-frequency laser 1, the shot noise, and the photodetector noise are seen. A change in the frequency due to the Doppler shift is "-35.8 MHz", and the frequency as a whole is shifted to the low-frequency side. The Doppler shift can be obtained by calculating the time average of the sum frequency.

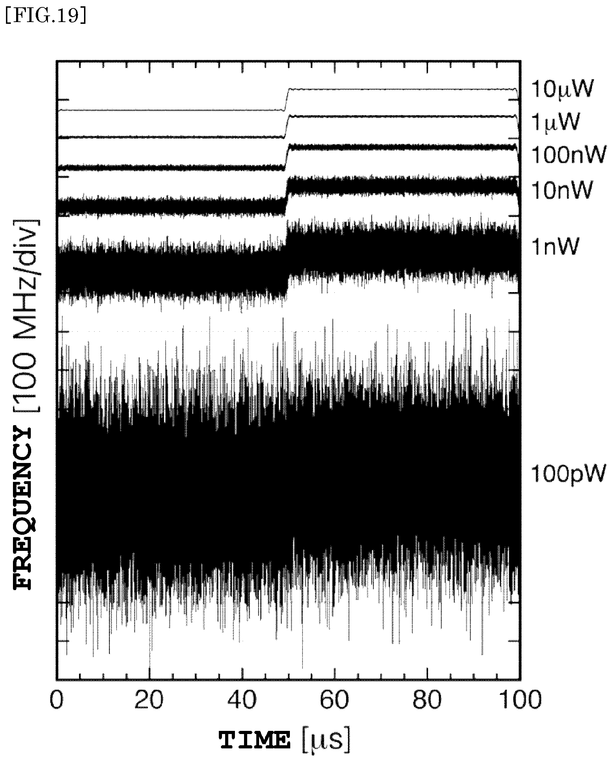

FIG. 19 is a diagram showing the time waveform of the difference frequency when the power of the signal light is changed from 10 µW to 100 pW. When the power of the signal light is 1 µW or more, the component derived from the frequency modulation is dominant and the difference between the frequencies corresponding to down-chirp and up-chirp is clearly seen. As the power of the signal light decreases, the noise derived from the shot noise and photodetector noise increases. When the power of the signal light is 100 pW, the component derived from the frequency modulation cannot be recognized.

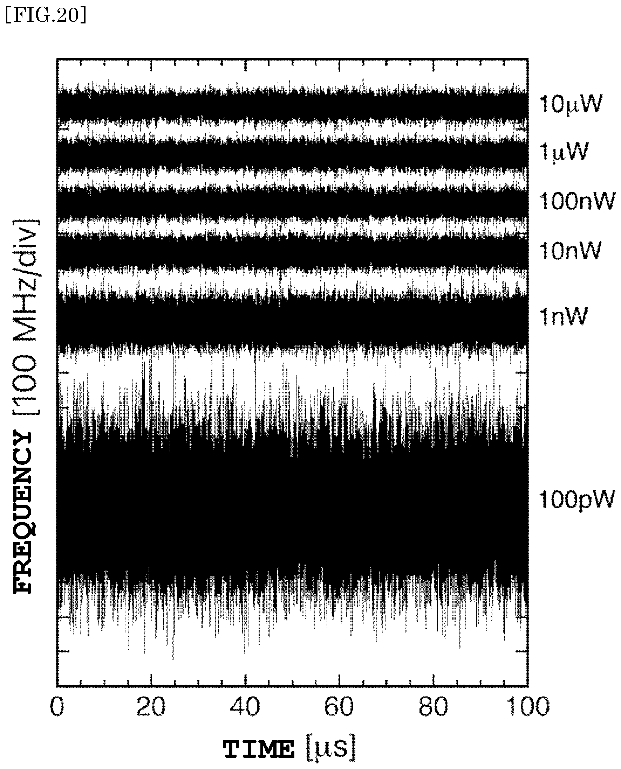

FIG. 20 is a diagram showing the time waveform of the sum frequency when the power of the signal light is changed from 10 µW to 100 pW. In the sum frequency, the frequency modulation is canceled, and the frequency noise of the multi-frequency laser 1, the shot noise, and the photodetector noise are seen. When the power of the signal light is 10 nW or higher, the magnitude of the noise is approximately constant and the frequency noise of the multi-frequency laser 1 is dominant. When the power of the signal light becomes 1 nW or less, the noise derived from the shot noise and photodetector noise is increased as the power of the signal light decreases.

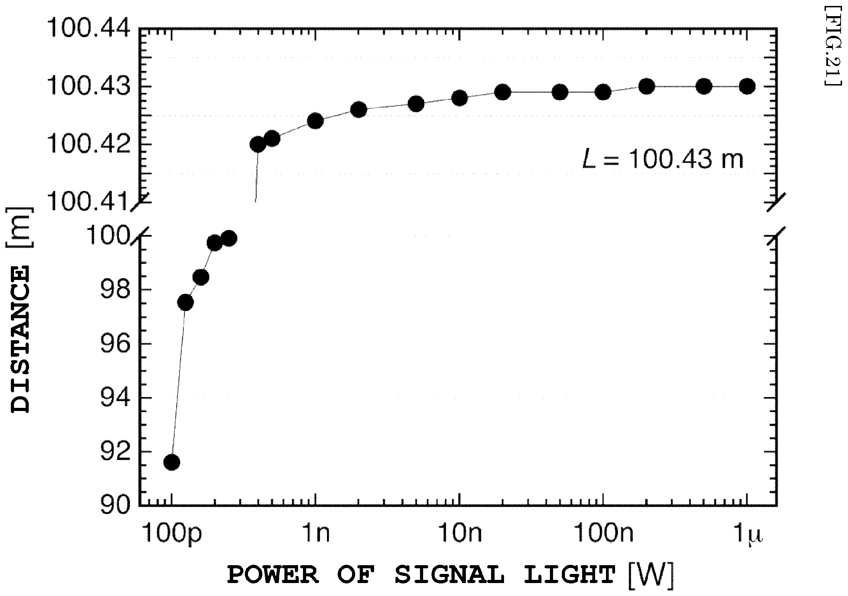

FIG. 21 is a graph showing the relationship between the power of the signal light and the distance calculated from the difference frequency. When the power of the signal light is 400 pW or higher, the distance measurement error with respect to the set distance of 100.43 m is 1 cm or less. When the power of the signal light becomes 400 pW or lower, the error increases as the power of the signal light decreases. When the power of the signal light is 100 pW, the error reaches 8.8 m.

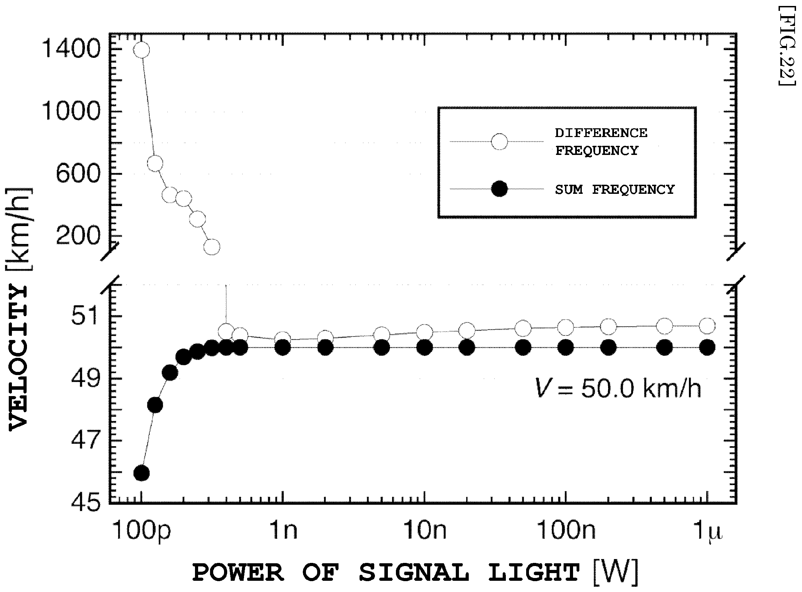

FIG. 22 shows changes in the velocity calculated from the sum frequency and changes in the velocity calculated from the difference frequency when the power of the signal light is changed. When the velocity is calculated from the difference frequency, an error of 0.7 km/h occurs even when the power of the signal light is 1 µW. Such an error is considered to be due to a reduction in the sensitivity of the difference frequency to the Doppler shift. While the error is approximately constant when the power of the signal light is within a range of 1 µW to 400 pW, the error sharply increases and becomes an unrealistic value when the power of the signal light becomes 400 pW or less. On the other hand, when the velocity is calculated from the sum frequency, the error gradually increases with respect to reductions in the power of the signal light and remains 10% or less even when the power of the signal light is 100 pW. Thus, use of the sum frequency can be said to allow the velocity of the object 7 to be measured with high accuracy.

As described above, the optical measuring apparatus 100 according to the present embodiment uses the multi-frequency laser 1 to generate the high-frequency subcarrier 16 with frequency modulation and the low-frequency subcarrier 17 with frequency modulation symmetrically positioned with respect to the frequency of the carrier and uses the optical splitter 2a to split the output light from the multi-frequency laser into the probe light 3 and reference light 4. The optical measuring apparatus 100 then uses the optical system 5 to apply the probe light 3 to the object 7 and to output the scattering light from the object 7 as the signal light 8 and uses the beat signal generator 9 to generate the first complex beat signal 31 derived from the high-frequency subcarrier 16 and the second complex beat signal 32 derived from the low-frequency subcarrier 17 from the reference light 4 and the signal light 8. Then, the calculation unit 14 calculates the velocity of the object 7 using the average value of the sum frequency, which is the sum of the frequency of the first complex beat signal 31 (the first frequency) and the frequency of the second complex beat signal 32 (the second frequency). As seen above, the optical measuring apparatus 100 calculates the velocity of the object 7 using the average value of the sum frequency and thus is able to remove the component derived from the frequency noise. This allows the optical measuring apparatus 100 to overcome the limit of the distance to the object 7 due to the coherence length of laser light and to measure the velocity of the object 7 with high accuracy.

The calculation unit 14 according to the present embodiment is configured to demodulate the first complex beat signal 31 to obtain the first frequency, to demodulate the second complex beat signal 32 to obtain the second frequency, and to add up the first frequency and the second frequency to obtain the sum frequency. Such demodulation is so-called "phase demodulation", and the process of the above Formula (5), for example, corresponds to such demodulation. This process simplifies and accelerates the calculation process.

Various configurations capable of implementing the above functions can be used as the multi-frequency laser 1. For example, as shown in FIG. 2, the multi-frequency laser 1 may be configured to include the single-frequency laser 18, optical modulator 19, modulation signal generator 20, and subcarrier generation signal generator 21 and to use the modulation signal generator 20 and subcarrier generation signal generator 21 to generate the high-frequency subcarrier 16 and the low-frequency subcarrier 17 in output light from the optical modulator 19. Or, as shown in FIG. 3, the multi-frequency laser 1 may be configured to include the semiconductor laser 22, modulation signal generator 20, and subcarrier generation signal generator 21 and to use the modulation signal generator 20 and the subcarrier generation signal generator 21 to generate the high-frequency subcarrier 16 and low-frequency subcarrier 17 in output light from the semiconductor laser 22 .

The optical measuring apparatus, optical measuring method, and optical measuring program according to the above embodiment are only illustrative, and the technical scope of the present invention is not limited thereto. For example, the optical measuring apparatus 100 may be configured such that the first complex beat signal 31 shown in FIGS. 5 and 6 and the second complex beat signal 32 shown in FIGS. 5 and 7 are outputted to the calculation unit 14 as they are. In this case, the calculation unit 14 may be configured to perform the processes performed by the quadrature detector 33a and quadrature detector 33b in the example configuration in FIG. 5, namely, the series of processes in which the two complex beat signals are split into the in-phase components and the quadrature components and outputted. In other words, the calculation unit 14 may have a function of extracting the in-phase component 10 and quadrature component 11 from the first complex beat signal 31 and extracting the in-phase component 12 and quadrature component 13 from the second complex beat signal 32.

### Industrial Applicability

The optical measuring apparatus, optical measuring method, and optical measuring program according to the present invention are able to detect the Doppler shift caused by the relative movement of the object with high sensitivity and thus to accurately measure the velocity of the object. Moreover, the optical measuring apparatus, optical measuring method, and optical measuring program according to the present invention do not require complicated devices or processes and thus are industrially useful as a compact and low-cost FMCW LiDAR system. Furthermore, the optical measuring apparatus, optical measuring method, and optical measuring program according to the present invention can be used in various consumer electronics and the like, for example, can be used as an environment recognition sensor in automobiles, autonomous robots, and the like.

### Description of Reference Signs

1 multi-frequency laser, 2a optical splitter, 2b optical coupler, 2c, 2d, 2e, 2f beam splitter, 3 probe light, 4 reference light, 5 optical system, 5a optical circulator, 5b transmitting/receiving optical system, 7 object, 8 signal light, 9 beat signal generator, 10, 12 in-phase component, 11, 13 quadrature component, 14 calculation unit, 14a communication unit, 14b calculation processing unit, 14c storage unit, 14p optical measuring program, 15 carrier, 16 high-frequency subcarrier, 17 low-frequency subcarrier, 18 single-frequency laser, 19 optical modulator, 20 modulation signal generator, 21 subcarrier generation signal generator, 22 semiconductor laser, 26 optical frequency shifter, 27 optical frequency shifter drive signal source, 28 reference signal, 29a, 29b, 29c optical splitter, 30a, 30b optical detector, 31 first complex beat signal, 32 second complex beat signal, 33a, 33b quadrature detector, 34 π/2 electrical phase shifter, 35a, 35b frequency mixer, 36a, 36b low-pass filter, 37, 38 reference light, 39, 40 signal light, 41a, 41b phase diversity detector, 42 π/2 optical phase shifter, 43a, 43b total reflection mirror, 44a, 44b balanced optical detector, 100 optical measuring apparatus

## Claims

1. An optical measuring apparatus comprising:
a multi-frequency laser configured to generate a high-frequency subcarrier with frequency modulation and a low-frequency subcarrier with frequency modulation, the high-frequency subcarrier and the low-frequency subcarrier being symmetrically positioned with respect to a frequency of a carrier;
an optical splitter configured to split light outputted from the multi-frequency laser into probe light and reference light;
an optical system configured to apply the probe light to an object and to output scattering light from the object as signal light;
a beat signal generator configured to receive the reference light and the signal light and to generate and output a first complex beat signal derived from the high-frequency subcarrier and including an in-phase component and a quadrature component and a second complex beat signal derived from the low-frequency subcarrier and including an in-phase component and a quadrature component; and
a calculation unit configured to calculate velocity of the object using an average value of a sum frequency, the sum frequency being a sum of a frequency of the first complex beat signal and a frequency of the second complex beat signal.

2. The optical measuring apparatus of claim 1,
wherein the multi-frequency laser includes:
a single-frequency laser;
an optical modulator configured to modulate light outputted from the single-frequency laser;
a subcarrier generation signal generator configured to drive the optical modulator to generate two subcarriers in the light outputted from the single-frequency laser; and
a modulation signal generator configured to apply frequency modulation to the two subcarriers generated by the subcarrier generation signal generator such that the two subcarriers are in opposite phase, and
wherein the multi-frequency laser uses the modulation signal generator and the subcarrier generation signal generator to generate the high-frequency subcarrier and the low-frequency subcarrier in the light outputted from the optical modulator.

3. The optical measuring apparatus of claim 1,
wherein the multi-frequency laser includes:
a semiconductor laser;
a subcarrier generation signal generator configured to generate two subcarriers in light outputted from the semiconductor laser; and
a modulation signal generator configured to apply frequency modulation to the two subcarriers generated by the subcarrier generation signal generator such that the two subcarriers are in opposite phase, and
wherein the multi-frequency laser uses the modulation signal generator and the subcarrier generation signal generator to generate the high-frequency subcarrier and the low-frequency subcarrier in the light outputted from the semiconductor laser.

4. The optical measuring apparatus of any one of claims 1 to 3, wherein
the calculation unit is configured to demodulate the first complex beat signal to obtain a first frequency that is a frequency of the first complex beat signal, demodulate the second complex beat signal to obtain a second frequency that is a frequency of the second complex beat signal, and sum up the first frequency and the second frequency to obtain the sum frequency.

5. An optical measuring method performed by an optical measuring apparatus including a multi-frequency laser, comprising:
a subcarrier generation step of simultaneously generating, by the multi-frequency laser, a high-frequency subcarrier with frequency modulation and a low-frequency subcarrier with frequency modulation, the high-frequency subcarrier and the low-frequency subcarrier being symmetrically positioned with respect to a frequency of a carrier;
a light splitting step of splitting, by an optical splitter, light outputted from the multi-frequency laser into probe light and reference light;
an application step of, by an optical system, applying the probe light to an object and outputting scattering light from the object as signal light;
a complex beat signal generation step of, by a beat signal generator, receiving the reference light and the signal light and generating and outputting a first complex beat signal derived from the high-frequency subcarrier and including an in-phase component and a quadrature component and a second complex beat signal derived from the low-frequency subcarrier and including an in-phase component and a quadrature component; and
a velocity calculation step of calculating, by a calculation unit, velocity of the object using an average value of a sum frequency, the sum frequency being a sum of a frequency of the first complex beat signal and a frequency of the second complex beat signal.

6. The optical measuring method of claim 5, wherein
the velocity calculation step includes, by the calculation unit, demodulating the first complex beat signal and the second complex beat signal to obtain a first frequency that is a frequency of the first complex beat signal and a second frequency that is a frequency of the second complex beat signal, respectively.

7. An optical measuring method performed by a calculation unit configured to calculate velocity of an object on the basis of light outputted from a multi-frequency laser configured to generate a high-frequency subcarrier with frequency modulation and a low-frequency subcarrier with frequency modulation, the high-frequency subcarrier and the low-frequency subcarrier being symmetrically positioned with respect to a frequency of a carrier, the optical measuring method comprising:
demodulating a first complex beat signal derived from the high-frequency subcarrier and including an in-phase component and a quadrature component and a second complex beat signal derived from the low-frequency subcarrier and including an in-phase component and a quadrature component to obtain a first frequency that is a frequency of the first complex beat signal and a second frequency that is a frequency of the second complex beat signal, respectively;
summing up the first frequency and the second frequency to obtain a sum frequency; and
calculating the velocity of the object using an average value of the sum frequency.

8. An optical measuring program for causing a computer included in a calculation unit, which is configured to calculate velocity of an object on the basis of light outputted from a multi-frequency laser configured to generate a high-frequency subcarrier with frequency modulation and a low-frequency subcarrier with frequency modulation, the high-frequency subcarrier and the low-frequency subcarrier being symmetrically positioned with respect to a frequency of a carrier, to function as velocity calculation means configured to:
demodulate a first complex beat signal derived from the high-frequency subcarrier and including an in-phase component and a quadrature component and a second complex beat signal derived from the low-frequency subcarrier and including an in-phase component and a quadrature component to obtain a first frequency that is a frequency of the first complex beat signal and a second frequency that is a frequency of the second complex beat signal, respectively;
sum up the first frequency and the second frequency to obtain a sum frequency; and
calculate velocity of the object using an average value of the sum frequency.
